(19) Europäisches Patentamt
European Patent Office
Office européen des brevets

(11) **EP 0 507 237 B1**

(12) **EUROPEAN PATENT SPECIFICATION**

(45) Date of publication and mention
of the grant of the patent:
**15.01.1997 Bulletin 1997/03**

(51) Int. Cl.⁶: **B62D 7/15**

(21) Application number: **92105474.8**

(22) Date of filing: **30.03.1992**

(54) **System for steering rear wheels of an automotive vehicle**

Hinterradlenkung für ein Kraftfahrzeug

Direction pour les roues arrière d'un véhicule automobile

(84) Designated Contracting States:
**DE FR GB**

(30) Priority: 30.03.1991 JP 93353/91
30.03.1991 JP 93354/91
30.03.1991 JP 93355/91
31.03.1991 JP 93499/91
02.07.1991 JP 188082/91

(43) Date of publication of application:
**07.10.1992 Bulletin 1992/41**

(73) Proprietor: **Mazda Motor Corporation
Aki-gun Hiroshima-ken (JP)**

(72) Inventors:
• **Akita, Ryuya,
c/o Mazda Motor Corporation
Aki-gun, Hiroshima-ken (JP)**
• **Hirabayashi, Shigefumi,
c/o Mazda Motor Corp.
Aki-gun, Hiroshima-ken (JP)**
• **Totoki, Nobuhiro,
c/o Mazda Motor Corporation
Aki-gun, Hiroshima-ken (JP)**

(74) Representative: **Zinnecker, Armin, Dipl.-Ing. et al
Lorenz-Seidler-Gossel,
Widenmayerstrasse 23
80538 München (DE)**

(56) References cited:
**EP-A- 0 322 681          EP-A- 0 379 143
DE-A- 3 338 702**

## Description

The present invention relates to a system for steering rear wheels of an automotive vehicle and, more particularly, to a system for steering rear wheels so adapted as to steer front wheels as well as rear wheels.

From EP-A-0-322 681 there is known a vehicle rear wheel steer angle control system according to the preamble of independent claim 1.

Among systems for steering rear wheels, there is furthermore known a rear-wheel steering system of such a type as electrically steering the rear wheels completely without mechanical interconnections between a mechanism for steering the rear wheels and a mechanism for steering the front wheels, as disclosed in Japanese Patent Laid-Open Publication (kokai) No. 57-44,568. Such an electrically interconnecting type of the system for steering the rear wheels can offer the advantage that the rear wheels can be steered even if the front wheels are sustained in the neutral position, however, it suffers from the disadvantage that it is difficult to set the rear wheels strictly in the neutral position as the front wheels are sustained in the neutral position. Further, such a system may be likely to provide the operator with feeling of uneasiness when the rear wheels are steered in a careless manner in a state in which the front wheels are sustained in the neutral position. In addition, the system has the defect that a sufficient extent of fail measures should be taken at the time of failure.

On the other hand, Japanese Patent Laid-open Publication (kokai) Nos. 62-227,871 and 1-273,772 disclose a system of a type of mechanically interconnecting a mechanism for steering the rear wheels with a mechanism for steering the front wheels and a steering-ratio altering mechanism is incorporated into such a mechanically interconnecting mechanism. This mechanically interconnecting mechanism can offer the advantage that the rear wheels can be sustained strictly in the neutral position when the front wheels are sustained in the neutral position, however, it suffers from the disadvantage that the rear wheels cannot be steered as long as the front wheels are to be steered.

It is to be noted herein that the rear wheel steering systems of both of the electrically interconnecting type and the mechanically interconnecting type are adapted to steer the rear wheels on the basis of predetermined characteristics. The characteristics may contain a characteristic term for a yaw rate, as disclosed in Japanese Patent Laid-open Publication (kokai) No. 57-44,568. The characteristic term for the yaw rate functions as an ingredient acting in the direction in which the yaw rate is converged when it occurs, that is, as an ingredient for correcting the steering characteristics so as to increase the quantity of a same phase.

Recently, however, a strong demand for a characteristic to be required for the rear-wheel steering system have been made to improve the ability of turning the head of the vehicle when the steering wheel starts steering from its neutral position. Such a demand is particularly strong for the rear wheel steering system of the mechanically interconnecting type.

More specifically, the steering characteristics should be set so as to be capable of steering the rear wheels in the direction of the same phase to a sufficient extent, from the point of view of improvement in stability as the major object of steering the rear wheels. On the other hand, it is to be noted that the steering characteristics set in terms of securing such stability makes it difficult to steer the rear wheels to such an extent as capable of satisfying the ability of turning the head of the vehicle, because a steered angle of the steering wheel is so small immediately after the steering wheel has started steering from its neutral position, when the rear wheels should always be sustained in their neutral positions in a state in which the front wheels are sustained in their neutral positions.

In particular, when the steering wheel should be turned quickly from either of its right or left position through its neutral position to its opposite position, for example, when the vehicle is running on a S-shaped curve, the ability of turning the head of the vehicle is strongly required at the moment when the steering wheel has passed through its neutral position, however, the rear-wheel steering system of the mechanically interconnecting type may not meet such a strong demand.

This problem may arise particularly when the steering characteristics contains the characteristic term for the yaw rate. In other words, when the steering wheel is steered quickly, a change of the yaw rate is caused to delay to some extent from a shift or a turn of the steering wheel. This means that the yaw rate that had caused to occur upon the previous turn remains still undisappeared even after the steering wheel has already been steered to the opposite position past its neutral position. The remaining yaw rate acts as increasing the quantity of the same phase, thereby leading to worsening the ability of turning the head of the vehicle.

In addition, a strong demand for the rear-wheel steering system has recently been made to improve stability upon the shift or the turn of the steering wheel toward its neutral position from either of its left position or its right position. Such a demand is required particularly for the rear wheel steering system of the mechanically interconnecting type.

More specifically, the rear wheel steering system of the mechanically interconnecting type allows the rear wheels to be located always in their neutral positions when the front wheels are sustained in their neutral positions. Hence, when the steering characteristic is so set as to be held in the direction of the same phase to a sufficient extent, as the front wheels approach to their neutral positions, in order to secure stability, the quantity of the same phase becomes too large in another range in which the steering wheel is operatively turned, thereby presenting the problem that the ability of turning the head of the vehicle is worsened.

2

Therefore, the present invention has the object to provide a system for steering rear wheels so adapted as to secure high stability as well as to achieve the high ability of turning the head of the vehicle, in accordance with the state in which the steering wheel is operatively turned.

According to the present invention, this object is achieved by a system as defined in independent claim 1. Embodiments of the invention are disclosed in the dependent claims.

The state to be detected, in which the steering wheel is operatively turned, may include the time at which the steering wheel is turned to the left or to the right from the opposite position past its neutral position. In this case, the ability of turning the head of vehicle is required. It is to be noted herein that, in order to satisfy the ability of turning the head of the vehicle, a steered angle of the rear wheel is corrected toward the direction of a reverse phase.

On the other hand, the state of operating the steering wheel to be detected may include the time at which the steering wheel is shifted or turned from its left or right position toward its neutral position. In this case, the stability of the vehicle is required. In order to satisfy the stability, the steered angle of the rear wheel is corrected toward the direction of the same phase.

The correction of the steered angle of the rear wheel is implemented by correcting a steering ratio to be determined by the predetermined steering characteristics. Although the quantity of correction may be set in an appropriate manner, it may be set, for example, by using an angular velocity of a steered angle as a parameter. It is further to be noted that the turn of the steering wheel toward the opposite position past the neutral position or the turn thereof from its right or left position toward the neutral position can be detected on the basis of the steered angle and the angular velocity of the steered angle. Generally, the steering characteristics are set as having a basic characteristic term set at least by using a vehicle speed as a parameter. When the steering characteristics contain a characteristic term for the yaw rate for increasing the quantity of the same phase to a larger extent as the yaw rate becomes larger, in addition to the basic characteristic term, the characteristic term for the yaw rate can function as a correction term for improving the ability of turning the head of the vehicle, by reversing the positive or negative sign of a control gain of the characteristic term for the yaw rate into the opposite sign. In this case, the yaw rate, which is still remaining even after the steering wheel ad been turned to the opposite position past its neutral position, is set as the quantity of correction for decreasing the quantity of the same phase.

The aforesaid correction may be implemented by setting a correction term within the steering characteristics in advance. In other words, the correction term may include a characteristic term for yaw acceleration for increasing the quantity of the same phase to a larger extent as the yaw acceleration becomes larger. The yaw acceleration varies following the operative shift or turn of the steering wheel with high responsiveness. This means that the yaw acceleration can quickly be raised at the initial moment of turning the steering wheel, thereby decreasing the quantity of the same phase and as a consequence improving the ability of turning the head of the vehicle. Further, the yaw acceleration becomes smaller at the time when the steering wheel is turned or shifted from its left or right position toward its neutral position, so that the quantity of the same phase is increased, thereby improving the stability to a sufficient extent.

The system having the aforesaid configuration according to the present invention is particularly suitable for the rear-wheel steering system of the mechanically interconnecting type as described hereinabove. The system according to the present invention offers the advantage that the ability of turning the head of the vehicle as well as the stability can be performed in accordance with the state in which the steering wheel is operatively turned, in addition to the merit of the rear wheel steering system of of the mechanically interconnecting type that the neutral positions of the rear wheels can be ensured when the front wheels are sustained in their neutral positions. It is to be noted that the present invention is appropriate particularly when the steering characteristics have the characteristic term for the yaw rate, in addition to the basic characteristic term.

On top of the function as the correction term, the characteristic term for the yaw acceleration can also function as new steering characteristics. In other words, the present invention consists of the system for steering rear wheels of an automotive vehicle having a mechanism for steering front wheels and a mechanism for steering rear wheels, so adapted as to control a quantity of operation of the mechanism for steering the rear wheels to give a target steering ratio obtainable on the basis of predetermined steering characteristics, wherein the steering characteristics is set so as to have a characteristic term for yaw acceleration for decreas-ing the quantity of the same phase to a smaller extent as the yaw acceleration becomes larger.

By setting the steering characteristics as having the characteristic term for the yaw acceleration, the ability of turning the head of the vehicle as well as the stability can be satisfied merely by performing control on the basis of the steering characteristics.

The steering characteristics having the characteristic term for the yaw acceleration is suitably adopted for the rear-wheel steering systems of both of the mechanically interconnecting type and the electrically interconnecting type.

It is preferred that at least one more characteristic term be set as the steering characteristics, in addition to the characteristic term for the yaw acceleration. Such an additional term may include a basic characteristic term set by using the vehicle speed as a parameter, a characteristic term for a steered angle, and the characteristic term for the yaw rate. These additional terms may be set singly or in combination of the other one or two.

Other objects, features and advantages of the present invention will become apparent in the course of the description of the preferred embodiments, which follows, with reference to the accompanying drawings.

## BRIEF DESCRIPTION OF THE DRAWINGS

Fig. 1 is a schematic representation showing an outline of a rear wheel steering system.

Fig. 2 is a perspective view showing a detailed portion of the rear wheel steering mechanism and a steering ratio changing mechanism.

Fig. 3 is a sectional view as taken along line X5-X5 of Fig. 2.

Fig. 4 is a schematic representation showing the principle of an operation of the steering ratio changing mechanism.

Fig. 5 is a graph showing characteristics indicative of an ingredient of a vehicle speed among the basic steering characteristics in formula (2).

Fig. 6 is a graph showing characteristics indicative of an ingredient of a steered angle of the steering wheel among the basic characteristics in formula (2).

Fig. 7 is a graph showing characteristics indicative of a control gain for the characteristic term for a yaw rate in formula (2).

Fig. 8 is a graph showing characteristics indicative of the state of changes of the yaw rate, a steering ratio and the steered angle of the rear wheel in formula (2), when the steering wheel is subjected to a step operation.

Fig. 9 is a graph showing characteristics indicative of the state of changes of the yaw rate, a steering ratio and the steered angle of the rear wheel in formula (2), when the steering wheel is subjected to a sine operation.

Fig. 10 is a schematic representation showing the control contents of the present invention, corresponding to Fig. 9.

Fig. 11 is a flowchart showing an example of control when the steering ratio as indicated in formula (2) is corrected.

Fig. 12 is a graph for determining the quantity of correction when the steering characteristics are corrected so as to increase the quantity of the same phase in formula (2).

Fig. 13 is a graph for determining the quantity of correction when the steering characteristics are corrected so as to increase the quantity of the reverse phase in formula (2).

Fig. 14 is a flowchart showing an example of control when the quantity of the reverse phase is increased by reversing the sign of the characteristic formula (2).

Fig. 15 is a graph showing characteristics of the basic characteristic term in formula (4).

Fig. 16 is a graph showing characteristics of the characteristic term for the steered angle in formula (4).

Fig. 17 is a graph showing characteristics of the characteristic term for the yaw rate in formula (4).

Fig. 18 is a graph showing characteristics of the characteristic term for the yaw acceleration in formula (4).

Fig. 19 is a schematic representation showing the contents of the present invention.

Fig. 20 is a graph showing an example of setting a threshold value of the yaw rate to be employed for step Q4 of Fig. 29.

Fig. 21 is a graph showing an example of setting a lower limit of the steered angle to be employed for step Q10 of Fig. 29.

Fig. 22 is a graph showing an example of setting a control gain to be employed for step Q13 of Fig. 29.

Fig. 23 is a graph showing an example of setting a lower limit of the steering ratio $\theta S$ to be employed for step Q23 of Fig. 30.

Fig. 24 is a graph showing an example of setting a control gain to be employed for step Q25 of Fig. 30.

Fig. 25 is a graph showing an example of setting an upper limit of the steering ratio $\theta S$ to be employed for step Q26 of Fig. 30.

Fig. 26 is a graph showing an example of setting a lower limit of a rear-wheel steered angle $\theta R$ to be employed for step Q36 of Fig. 31.

Fig. 27 is a graph showing an example of setting a control gain to be employed for step Q38 of Fig. 31.

Fig. 28 is a graph showing an example of setting an upper limit of the rear-wheel steered angle $\theta R$ to be employed for step Q39 of Fig. 31.

Fig. 29 is a flowchart showing part of a preferred example of the control of the present invention.

Fig. 30 is a flowchart showing part of the preferred example of the control of the present invention.

Fig. 31 is a flowchart showing part of the preferred example of the control of the present invention.

Fig. 32 is a schematic representation showing the contents of formulas (7) and (8).

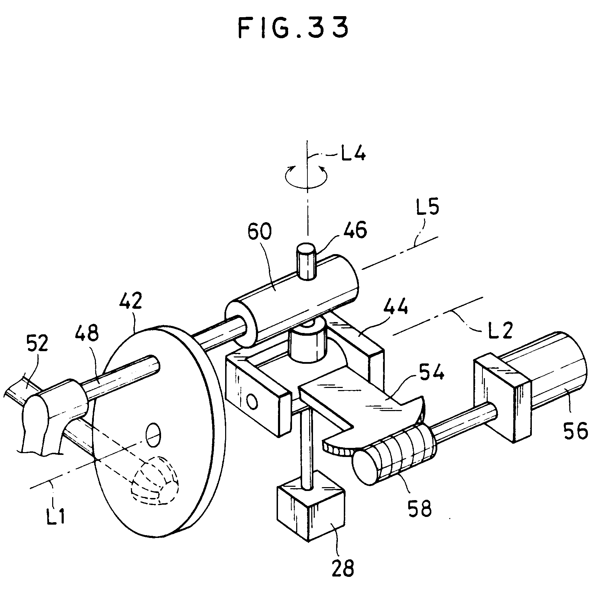

Fig. 33 is a perspective view showing an essential portion of a variant of the steering-ratio changing mechanism.

## DESCRIPTION OF THE PREFERRED EMBODIMENTS

### Fig. 1

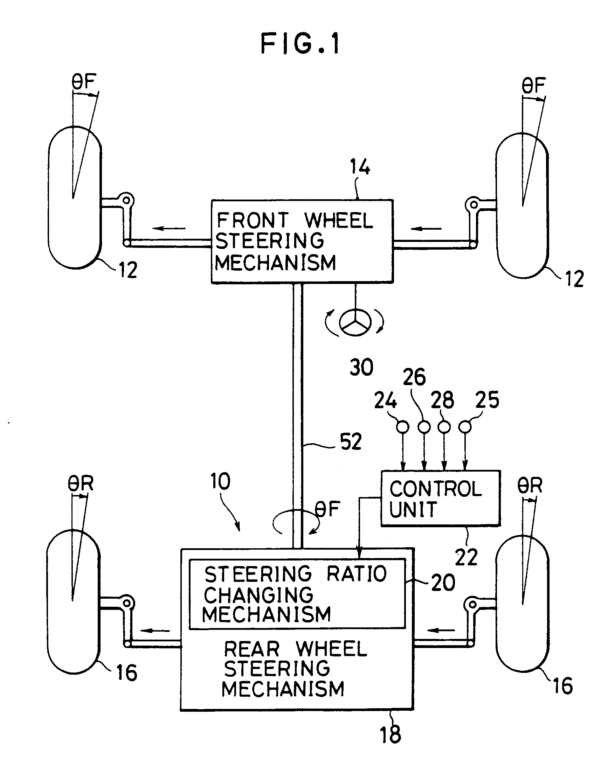

As shown in Fig. 1, a left-hand front wheel 12 is interconnected with a right-hand front wheel 12 through a front wheel steering mechanism 14 and a left-hand rear wheel 16 is interconnected with a right-hand rear wheel 16 through a rear wheel steering mechanism 18. The front wheel steering mechanism 14 is connected with a steering wheel 30 and the front wheels are operatively steered to the left or to the right at a front wheel steered angle $\theta F$ by the aid of the steering wheel 30. On the other hand, the left-hand and right-hand rear wheels 16 are steered concurrently to the left or to the right each at a rear wheel steered angle $\theta R$.

The front wheel steering mechanism 14 is mechanically interconnected with the rear wheel mechanism 18 through an intermediate shaft 52 constituting an interconnecting mechanism. This arrangement can transmit the front wheel steered angle $\theta F$ through the intermediate shaft 52 to the rear wheel steering mechanism 18. The front wheel steered angle $\theta F$, that is, an amount in which the intermediate shaft 52 is operated, is transmitted through a steering-ratio changing mechanism 20 to the rear wheel steering mechanism 18 in a predetermined steering ratio $\theta S$ that may be represented as a ratio of the rear wheel steered angle $\theta R$ to the front wheel steered angle $\theta F$, i.e. $\theta R/\theta F$. Hence, even if the front wheel steered angle $\theta F$ would be the same, the rear wheel steered angle $\theta R$ may optionally be altered by the aid of the steering-ratio changing mechanism 20.

Although the steering-ratio changing mechanism 20 itself is known, an example thereof will be described more in detail. The steering-ratio changing mechanism 20 may be controlled by a control unit U composed, for example, of a microcomputer. The control unit U is arranged so as to determine a target steered angle of the rear wheel from a predetermined steering ratio $\theta S$ obtainable on the basis of predetermined steering characteristics and to subject the steering-ratio changing mechanism 20 to feedback control to allow the actual steered angle $\theta R$ of the rear wheel 16 to reach the target steered angle while checking output of a steering ratio sensor 28 for detecting a steering ratio.

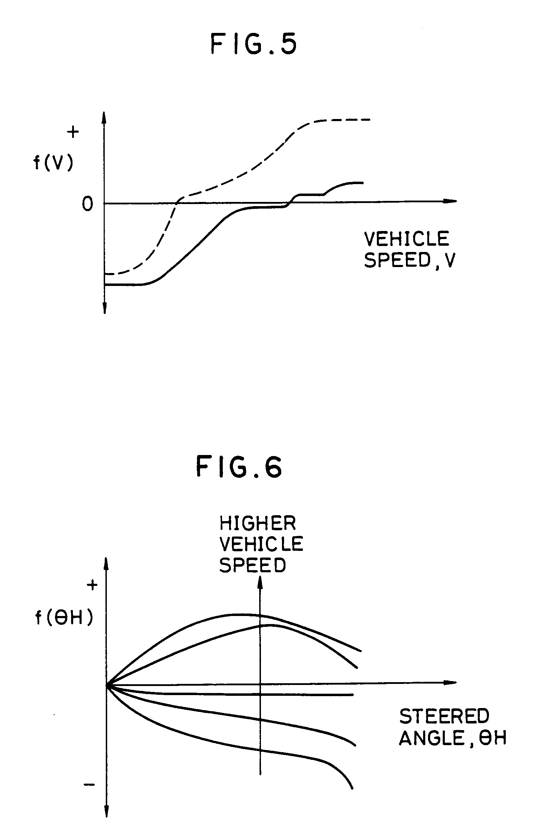

## Steering Characteristics (Figs. 5 - 9)

In this example, the steering characteristics are set by using a vehicle speed, a steered angle and a yaw rate as parameters. Hence, the control unit U is fed with signals from a vehicle speed sensor 24 for detecting a vehicle speed V, a steered angle sensor 25 for detecting a steered angle $\theta H$ of the steering wheel 30, and a yaw rate sensor 26 for detecting a yaw rate Y.

The steering characteristics in this example are set to determine the steering ratio $\theta S$ by the following formula (1):

$$\theta S = C1 + C2 \cdot Y \tag{1}$$

In the formula (1) above, the term C1 is the basic steering characteristic term, and the term $C2 \cdot Y$ is the characteristic term for the yaw rate. In this example, the basic steering characteristic term C1 is set as a function $f(V, \theta H)$ that in turn is set by using the vehicle speed V and the steered angle $\theta H$ of the steering wheel as parameters, and the ingredient of the term, C2, is set as a function $g(V)$ that in turn is set by using the vehicle speed V as a parameter. Thus, the formula (1) above can be converted into the following formula (2):

$$\theta S = f(V, \ \theta H) + g(V) \cdot Y \tag{2}$$

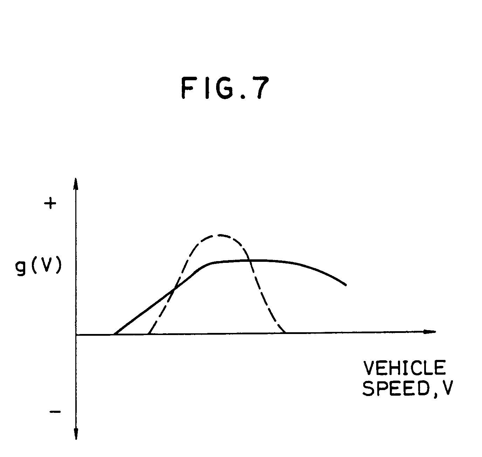

Out of the function $f(V, \theta H)$, the characteristics for the ingredient of the vehicle speed V may be set, for example, as indicated by the solid line in Fig. 5, and the characteristics for the ingredient of the steered angle $\theta H$ may be set, for example, as indicated in Fig. 6. The characteristics of the function $g(V)$ may be set, for example, as indicated by the solid line or by the broken line in Fig. 7. In this case, the solid line in Fig. 7 corresponds to when the case as indicated by the solid line in Fig. 5 is adopted, and the broken line in Fig. 7 corresponds to when the case as indicated by the broken line in Fig. 5 is adopted.

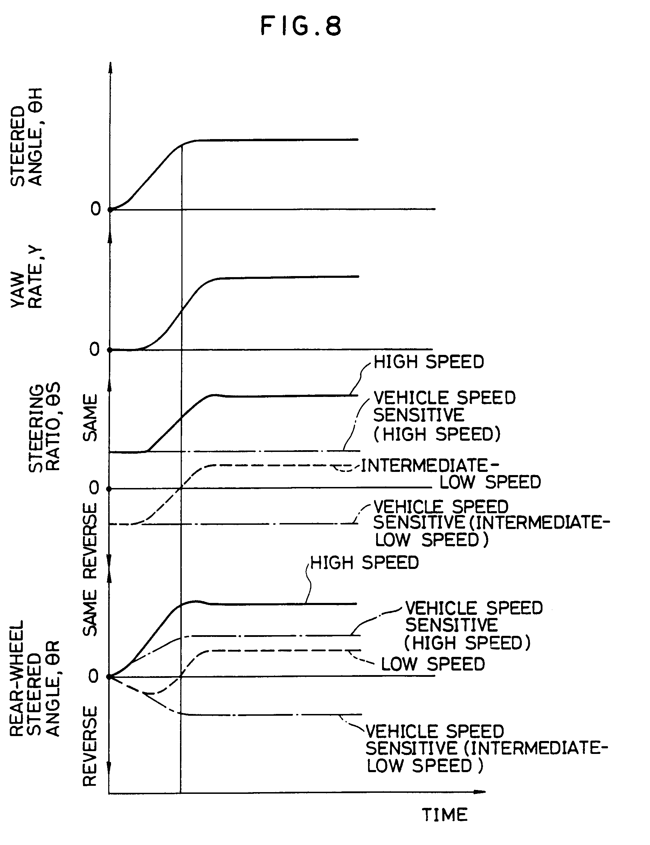

Fig. 8 indicates periodical changes of the yaw rate Y in association with the steering ratio $\theta S$ and the steered angle $\theta R$ of the rear wheel, when the steering wheel 30 is subjected to a so-called step input on the basis of the steering characteristics as described hereinabove. It is noted herein that the steering ratio $\theta S$ and the steered angle $\theta R$ of the rear wheel, as indicated by the one-dot-and-dash line, are focusing the ingredient of the vehicle speed.

On the other hand, Fig. 8 (corresponding to Fig. 8) indicates the case in which the steering wheel 30 is subjected to a so-called sine input on the basis of the steering characteristics as described herein-above. In this case, the quantity of the same phase becomes too large, immediately after the time t1 at which the steering wheel 30 reaches its neutral position after operation of the steering wheel 30, so that the ability of turning the head of the vehicle becomes poor.

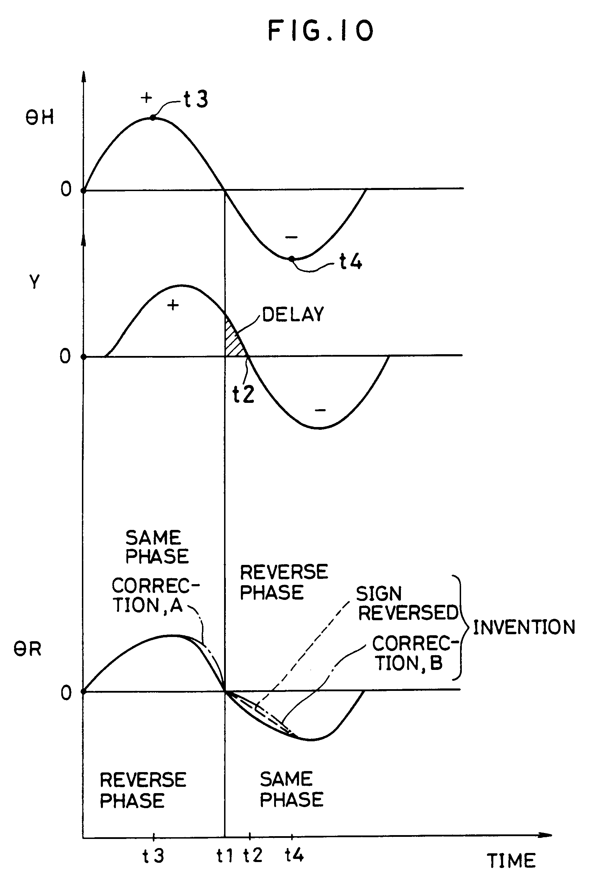

## Correction by State of Operation of Steering Wheel (Fig. 10)

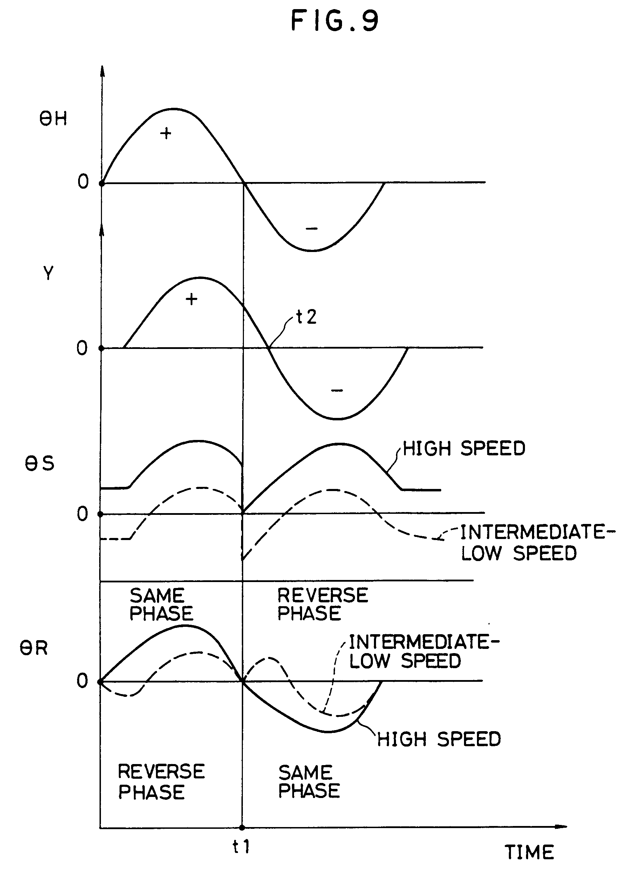

In this example, the steered angle $\theta R$ of the rear wheel is corrected so as to decrease the quantity of the same phase, that is, so as to increase the quantity of a reverse phase, immediately after the time t1, by correcting the steering ratio $\theta S$ obtainable by reversing the positive or negative sign of the characteristic terms for the steering characteristics or on the basis of the above formulas. Fig. 10 indicates the case in which the quantity of the reverse phase is increased and refers to the necessary portion as indicated in Fig. 9. As shown in Fig. 10, the broken line indicated immediately after the time t1 refers to the case in which the sign of the characteristic formula is reversed and the one-dot-and-dash line indicated refers to the case in which the steering ratio θS is corrected.

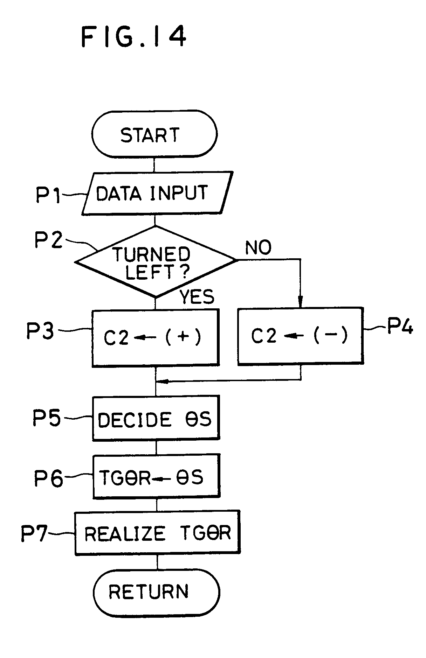

## Specific Example of Correction (Figs 10 & 14)

A description will now be made of the case in which the quantity of the reverse phase is increased by reversing the sign of the characteristic formula. For brevity of explanation, the characteristic formula (1) is referred to as the steering characteristics, while the basic steering characteristic term C1 is disregarded from the following description because it has nothing to do with the increase in the quantity of the reverse phase.

Given the foregoing, the steered angle θH of the steering wheel, the yaw rate Y and the control gain C2 for the yaw rate are provided each with the positive or negative sign in a manner as will be described hereinafter.

The steered angle θH of the steering wheel is provided with the positive sign (+) when the steering wheel 30 is steered to the left from its neutral position, while the steered angle thereof is provided with the negative sign (-) when the steering wheel 30 is turned to the right from its neutral position.

The yaw rate Y is provided with the positive sign (+) when the yaw rate is caused to occur to the left, while it is provided with the negative sign (-) when the yaw rate is caused to occur to the right. The control gain C2 is provided with the positive sign (+) when the steering wheel 30 is steered to the left from its neutral position, while it is provided with the negative sign (-) when it is turned to the right from its neutral position.

When the term $C2 \cdot Y$ is provided with the positive sign (+) in the way as described hereinabove, this term serves as an ingredient for increasing the quantity of the same phase. When the term $C2 \cdot Y$ is symbolized with the negative sign (-), this terms serves as an ingredient for decreasing the quantity of the reverse phase. Although the steered angle θH of the steering wheel is provided with the positive or negative sign merely for brevity of explanation, it is sufficient to set the relationship of the control gain C2 with the direction of operation to the left or to the right from the neutral position of the steering wheel.

The steered angle θH of the steering wheel 30 and the yaw rate Y are provided each with the positive sign (+) until the time t1 elapses after the steering wheel 30 has been operatively turned or shifted to the left from its neutral position, as shown in Fig. 10 (Fig. 9). Likewise, the control gain C2 is provided with the positive sign (+). Hence, the term $C2 \cdot Y$ is also provided with the positive sign (+) as a whole because the control gain C2 with the positive sign (+) is multiplied by the yaw rate Y with the positive sign (+), and this term serves as correcting the steering characteristics so as to increase the quantity of the same phase in the manner as having basically been designed.

As the occurrence of the yaw rate Y is delayed to some extent after the operation of the steering wheel up to the time t2 after the time t1, the steered angle θH of the steering wheel is provided with the negative sign (-), while the yaw rate Y is provided with the positive sign (+). Hence, the control gain C2 is provided with the negative sign (-) by reversing the negative sign of the steered angle θH of the steering wheel. As a result, the term $C2 \cdot Y$ gives the negative sign (-) because the steered angle θH with the negative sign (-) is multiplied by the yaw rate Y with the positive sign (+), thereby increasing the quantity of the reverse phase. As the time passes the point t2, the steered angle θH is reversed to the negative sign (-) and the yaw rate Y is also reversed to the negative sign (-), while the control gain C2 is provided with the negative sign (-). As a result, the term $C2 \cdot Y$ is provided with the positive sign (+) because the negative sign (-) of the steered angle θH is multiplied by the negative sign (-) of the yaw rate Y, thereby increasing the quantity of the same phase in the manner as having basically been designed.

Even if the steering wheel 30 is subjected to the sine input as shown in Fig. 10, the yaw rate Y follows the changes of the steered angles of the steering wheel when the steering wheel 30 is operatively turned slowly, and the yaw rate Y is turned to "0" at the time t1 at which the steering wheel 30 has reached its neutral position. Although the quantity of the reverse phase is not increased by the characteristic term for the yaw rate at this time, no problem may occur at all because the ability of turning the head of the vehicle is not required so much when the steering wheel 30 is operatively turned slowly.

Now, the contents of the control by reversing the signs of the characteristic formula will be made with reference to the flowchart of Fig. 14.

First, at step P1, signals are entered from each of the sensors, followed by proceeding to step P2 at which a decision is made to determine if the steering wheel 30 is operatively turned to the left from its neutral position. When it is decided at step P2 that the steering wheel 30 is operatively turned to the left, on the one hand, then the program flow goes to step P3 and the control gain C2 is provided with the positive sign (+). When the result of decision at step P2 indicates that the steering wheel 30 is turned to the right, on the other hand, then the program flow goes to step P4 at which the control gain C2 is provided with the negative sign (-).

After step P3 or step P4, the program flow goes to step P5 at which a target steering ratio θS is determined on the basis of the formula (1), that is, the formula (2).

Then, at step P6, there is determined a target steered angle of the rear wheel, TGθR, corresponding to the steering ratio as determined at step P5, followed by proceeding to step P7 at which the steering-ratio changing mechanism 20 is controlled so as for an actual steered angle θR of the rear wheel to reach the target rear-wheel steered angle TGθR.

## Another Specific Example of Correction (Figs. 10-13)

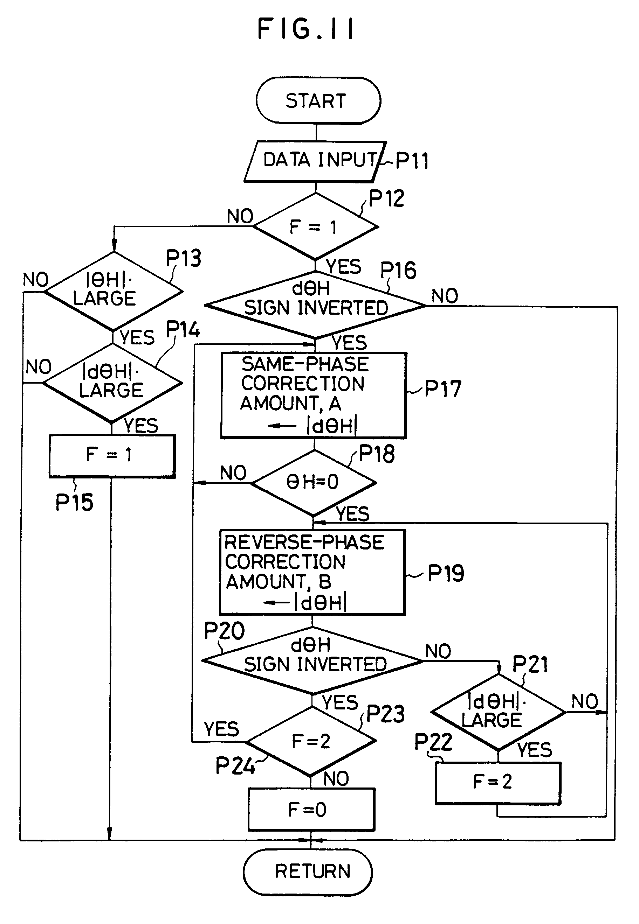

Fig. 11 shows an example in which the steering ratio θS obtainable on the basis of the formula (1) or the formula (2) is corrected. This correction is implemented so as to set the steering characteristics in the direction of the reverse phase at the time when the steering wheel is steered to the opposite direction past its neutral position, thereby improving the ability of turning the head of the vehicle, while the steering ratio θS is corrected so as to set the steering characteristics in the direction of the same phase at the time when the steering wheel is turned or shifted to its neutral position from its left or right position, thereby improving the stability.

First, at step P11, signals are entered from each of the sensors, followed by proceeding to step P12 at which a decision is made to determine if a flag F is set to "1". It is noted herein that the setting of the flag F to "1" means the time when the steering wheel 30 is steered or shifted to make a turn from its left or right position to the opposite position past its neutral position, while the setting of the flag F to "2" means the time when the steering wheel 30 makes continuously such turns. When the result of decision at step P12 indicates that the flag F is not set to "1", then the program flow goes to step P13 at which a decision is made to determine if the absolute value of the steered angle θH of the steering wheel is larger than a predetermined value, that is, if the steering wheel 30 is operatively turned to a large extent from its neutral position. When it is decided at step P13 at which the absolute value of the steered angle θH is larger than the predetermined value, then the program flow goes to step P14 at which a decision is further made to determine if a change ratio of the steered angles of the steering wheel, dθH, obtainable by differentiating the steered angle θH of the steering wheel, is larger than a predetermined value, that is, if the steering wheel 30 is operatively steered rapidly. When the result of decision at step P14 indicates that the change rate dθH is larger than the predetermined value, then the flag F is set to "1" at step P15, followed by the return of the program flow. On the other hand, when it is decided that the absolute value of the steered angle θH is equal to or smaller than the predetermined value at step P13 or that the change rate dθH is equal to or smaller than the predetermined value at step P14, then the program flow is returned as it is.

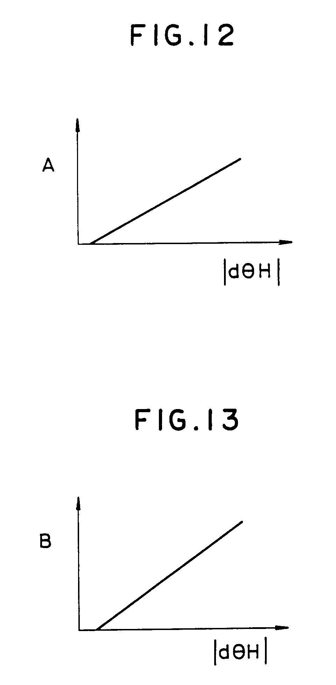

After it is decided at step P12 that the flag F is set to "1", it is further decided at step P16 to determine if the positive or negative sign of the change rate of the steered angle θH, as indicated by dθH, is inverted or reversed to its opposite sign. The decision at step P16 is adapted to determine eventually if the steering wheel 30 is changed from the state in which the the steered angle of the steering wheel 30 has been increased to the state in which it has been returned from its right or left position toward its neutral position, that is, if the steering wheel 30 is located in the position t3 in Fig. 10 in which the steering wheel 30 starts turning toward its neutral position. When it is decided at step P16 that the sign of the change rate dθH has been inverted or reversed to its opposite sign, then the program flow goes to step P17 at which a correction amount A for correction in the direction of the same phase is determined on the basis of the absolute value of the change rate dθH of the steered angle θH, as indicated by |dθH|, from the map as shown in Fig. 12. The correction amount A is added to the steering ratio θS obtainable on the basis of the formula (1) or the formula (2), and the steering ratio θS is corrected in the direction of the same phase, as shown in Fig. 10 in which the corresponding portion is referred to by "Correction A" as indicated by the broken line prior to the time t1. This correction can improve stability when the steering wheel 30 is returned toward its neutral position from its left or right position.

After step P17, the program flow goes to step P18 at which it is decided to determine if the steered angle θH of the steering wheel 30 is set to "0", that is, if the time reaches t1 in Fig. 10. When the result of decision at step P18 indicates that the steered angle θH is not set to "0", then the program flow is returned to step P17 at which the correction by the correction amount A is continued to increase the quantity of the same phase.

When it is decided at step P18 that the steered angle θH is set to "1", an correction amount B for correction in the direction of the reverse phase is determined on the basis of the absolute value of the change rate of the steered angle from the map of Fig. 13. The correction amount B is subtracted from the steering ratio θS obtainable on the basis of the formula (1) or the formula (2), thereby correcting the steering ratio θS in the direction of the reverse phase. The correction in the direction of the reverse phase by the correction amount B is shown in Fig. 10 in which the corresponding portion is referred to as "Correction B" as indicated from the time t1 to t4 by the one-dot-and-dash line. This correction can improve the ability of turning the head of the vehicle.

After step P19, then the program flow goes to step P20 at which a decision is made to determine if the sign of the angular velocity of the steered angle θH, as indicated by dθH, is inverted or reversed to its opposite sign. This decision corresponds to the contents of determination at step P16. When it is decided at step P20 that the sign of the angular velocity dθH is not reversed to its opposite sign, then the program flow goes to step P21 and a decision is made to determine if the absolute value of the angular velocity, as indicated by |dθH|, is larger than a predetermined value. When it is decided at step P21 that the absolute value of the angular velocity is larger than the predetermined value, on the one hand, it is predicted that the steering wheel is rapidly turned again to the opposite position past its neutral position, so that the flag F is set to 2 at step P22, followed by the return to step P19. When the result of decision at step P21 indicates that the absolute value of the angular velocity is equal to or smaller than the predetermined value, on the other hand, the program flow returns to step P19 without passage through step P22.

When it is decided at step P20 that the sign of the angular velocity is reversed to the opposite sign, then the program flow goes to step P23 at which a decision is further made to determine if the flag F is set to 2. Then, when the result of decision at step P23 indicates that the flag F is set to 2, on the one hand, the program flow is returned to step P17. When it is decided at step P23 that the flag F is not set to 2, on the other hand, then the program flow goes to step P24 and the flag F is reset to "0", followed by the return to step P1.

It is further to be noted that, as the steering characteristics may be set in an appropriate fashion, the steering characteristics to be used in instances where the correction is implemented in the manner as in Fig. 11 may not necessarily contain the characteristic term for the yaw rate.

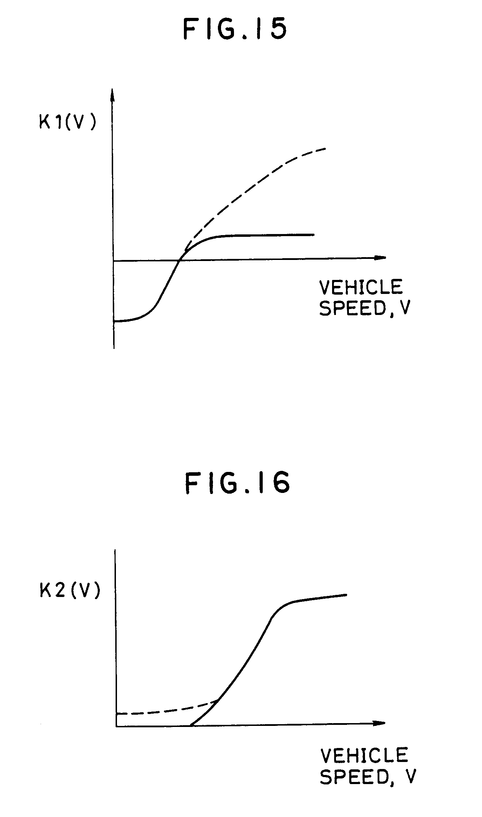

## Steering Characteristics by Yaw Acceleration (Figs. 15-19)

The yaw acceleration dY is computed by differentiating the yaw rate Y.

The steering characteristics in this example are set so as to determine the steering ratio $\theta S$ on the basis of the following formula (3):

$$\theta S = D1 + D2 \cdot |\theta H| + D3 \cdot |Y| - D4 \cdot |dY| \tag{3}$$

where

$D1$        is the basic steering characteristic term;
$D2 \cdot |\theta H|$        is the characteristic term for the steered angle;
$D3 \cdot |Y|$        is the characteristic term for the yaw rate; and
$D4 \cdot |dY|$        is the characteristic term for the yaw acceleration.

In the above formula, the positive sign (+) means an increase in the quantity of the same phase and the negative (-) means a decrease in the quantity of the same phase. Hence, the characteristic terms for the steered angle and for the yaw rate are meant to serve each as an ingredient for increasing the quantity of the same phase and the characteristic term for the yaw acceleration is meant to serve as an ingredient for decreasing the quantity of the same phase.

It is to be noted herein that, in this embodiment, the symbols D1, D2, D3 and D4 are set as functions K1(V), K2(V), K3(V) and K4(V), respectively, that use each a vehicle speed V as a parameter. In other words, the formula (3) can be converted into formula (4):

$$\theta S = K1(V) + K2(V) \cdot |\theta H| + K3(V) \cdot |Y| - K4(V) \cdot |dY| \tag{4}$$

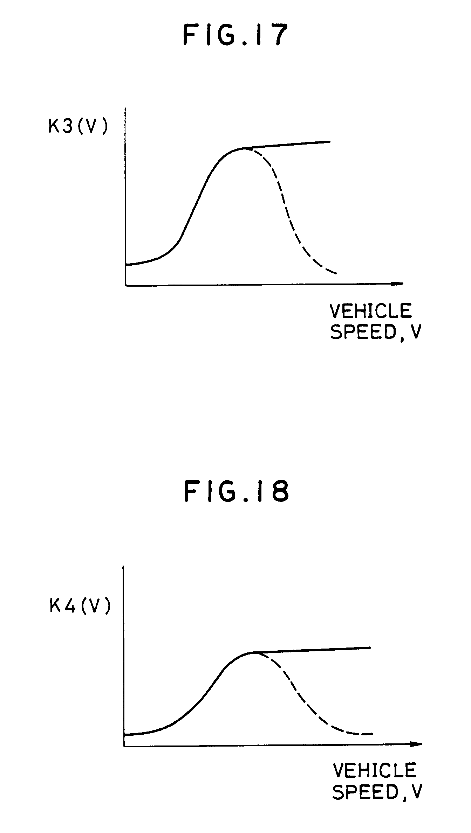

In the formula (4) above, the function K1(V) is set, for example, as shown in Fig. 15, the function K2(V) is set, for example, as shown in Fig. 16, the function K3(V) is set, for example, as shown in Fig. 17, and the function K4(V) is set, for example, as shown in Fig. 18. In each of the figures, there are indicated two functions by the solid line and the broken line. In this embodiment, there are combined the functions as indicated by the solid lines in Figs. 15, 16, 17 and 18, while the functions as indicated by the broken lines in Figs. 15, 16, 17 and 18 are combined.

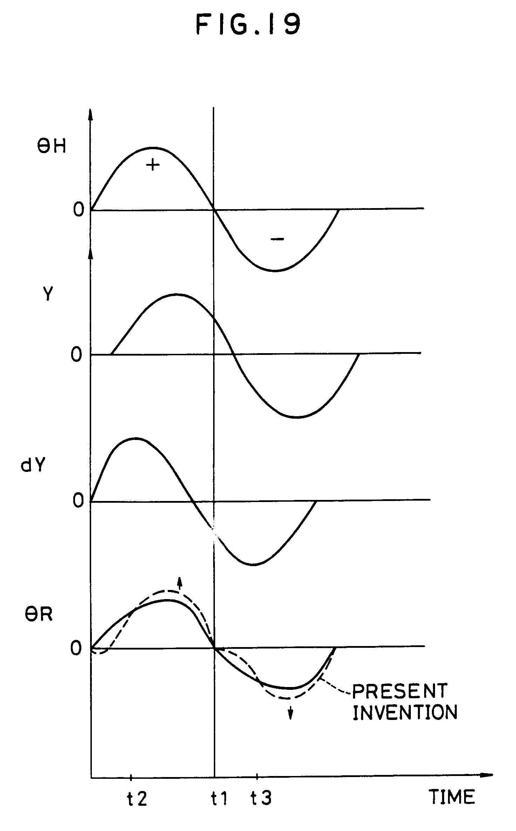

Fig. 19 shows the instances where the steering wheel 30 is subjected to a so-called sine input on the basis of the steering characteristics as described hereinabove. As shown in fig. 19, the broken line indicates the case in which the steering characteristics are provided with no characteristic term for the steered angle in order to demonstrate the effect to be created by the yaw acceleration. When the characteristic term for the steered angle is added, the quantity of the same phase becomes larger when the steered angle of the steering wheel is larger, particularly when the steering wheel is returned toward its neutral position from its left or right position, as indicated by the arrow in Fig. 19.

As shown in Fig. 19, until the time reaches the point t2 from the time when the steering wheel 30 has started turning, the yaw acceleration is predominant, thereby decreasing the quantity of the same phase and improving the ability of turning the head of the vehicle. The yaw acceleration reaches the peak at the position t2 and thereafter the yaw rate becomes predominant, thereby improving the stability at the time when the steering wheel 30 is returned toward its neutral position from its left or right position. Although the yaw rate remains at the time when the steering wheel 30 has been returned to its neutral position at the point t1, the yaw rate is compensated by the yaw acceleration, thereby preventing the ability of turning the head of the vehicle from worsening immediately after the point t1. Thereafter, the yaw acceleration is increased to make a decrease in the quantity of the same phase predominant, thereby satisfying the ability of turning the head of the vehicle. After the time passes the point t3, the yaw rate becomes predominant, thereby improving the stability.

It is to be noted herein that the steering characteristics may contain no basic steering characteristic term D1, that is, the function K1(V).

## Figs. 20 - 31

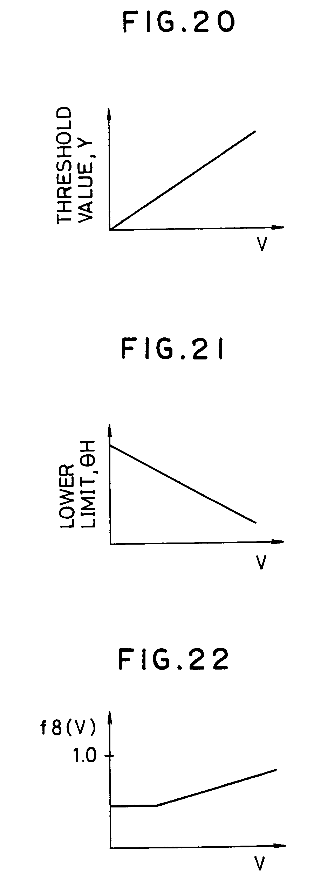

A description will then be made of the preferred example of the control of the present invention with reference to Figs. 20 et seq. This example is adapted to make correction so as to restrict the quantity of the same phase by correcting the characteristic term for the steered angle, the target steering ratio, and the target steered angle of the rear wheel. Figs. 20 to 28 indicate control standard values to be employed for this example of the control, such as the threshold value, each being set by using the vehicle speed V as a parameter. It is further to be noted that, in order to correct the characteristic term for the steered angle, the characteristic term for the steered angle in the formula (4) above is replaced by the following formula (5):

$$\text{Characteristic term for steered angle} = K1(V) \cdot \theta HM \cdot FLAG \tag{5}$$

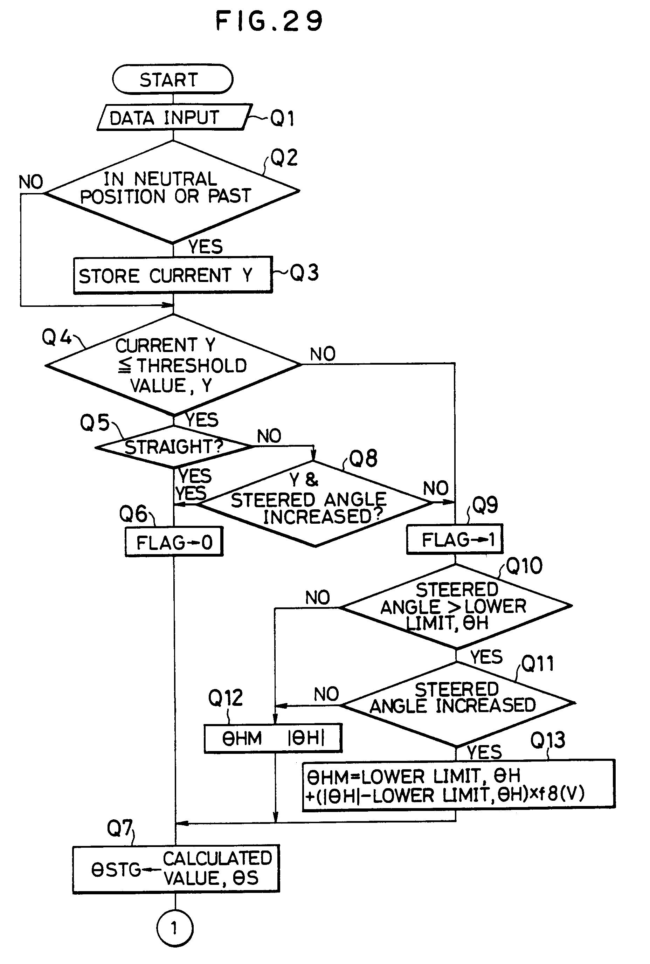

Given the foregoing, the example of the control will be described with reference to the flowcharts as shown in Figs. 29 to 31.

First, at step Q1 in Fig. 29, signals are entered from each of the sensors, followed by proceeding to step Q2 at which a decision is made to determine if the state in which the steering wheel is currently operated is the state in which the steering wheel is sustained in its neutral position or has passed its neutral position. When the decision at step Q2 give the affirmative result, on the one hand, then the program flow goes to step Q3 at which the current yaw rate Y is stored, followed by proceeding to step Q4. When the decision at step Q2 gives the negative result, on the other hand, then the program flow goes to step Q4 without passage through step Q3.

Then, at step Q4, it is decided to determine if the yaw rate Y stored at step Q2 is equal to or lower than a threshold value of the yaw rate Y as shown in Fig. 20. When it is decided at step Q4 that a large amount of the yaw rate caused to occur by the previous turn does not remain any more when the steering wheel is sustained in its neutral position, then the program flow goes to step Q5 at which it is confirmed that the steering wheel is sustained in a state in which the steering wheel is in a nearly straight running state. Then, at step Q6, FLAG is set to "0". By setting FLAG to "0", the operation of the characteristic term for the steered angle in the formula (5) above is substantially inhibited, because the amount of operation for the characteristic term for the steered angle is set to "0". After step Q6, the program flow proceeds to step Q7 at which the steering ratio as is determined on the basis of the formula (4) (or the characteristic term for the steered angle is determined on the basis of the formula (5)), and the steering ratio θS is computed to give a target basic steering ratio θSTG.

When the result of decision at step Q5 indicates that the steering wheel is not sustained in the straight running state, then the program flow goes to step Q8 at which a decision is further made to determine if the steered angle and the yaw rate Y are both increasing. When it is decided at step Q8 that both of the steered angle and the yaw rate Y are increasing, then the program flow goes to step Q6 at which the operation of the characteristic term for the steered angle is inhibited because the steered angle of the steering wheel is increased and the ability of turning the head of the vehicle is required.

When it is decided at step Q8 that both of the steered angle and the yaw rate Y are not increasing or when it is decided at step Q4 that the current yaw rate Y is larger than the threshold value of the yaw rate Y, the steering wheel is operatively turned to the left and to the right rapidly as in the case, for example, when the vehicle is running on a sharply S-shaped curve. Then, at step Q9, FLAG is set to "1", thereby allowing an operation by the characteristic term for the steered angle to be implemented. Thereafter, at step Q10, a decision is made to determine if the steered angle is larger than a lower limit of the steered angle (see Fig. 21). When it is decided at step Q10 that the steered angle is larger than the lower limit, then the program flow goes to step Q11 at which the steered angle of the steering wheel is increased. When the decision at step Q11 gives the affirmative result, then the program flow goes to step Q13 at which the ingredient θHM of the characteristic term for the steered angle is determined in accordance with the formula indicated at step Q13 in Fig. 29, followed by proceeding to step Q7. The processing at step Q13 is adapted to decrease the quantity of the same phase to be computed by the characteristic term for the steered angle.

When the decision at step Q10 or the decision at step Q11 gives the negative result, then the program flow goes to step Q12 and θHM is set as a current steered angle of the steering wheel, followed by proceeding to step Q7. The proceeding at step Q12 is adapted to determine the steering ratio on the basis of the steering characteristics in the formula (4), and no correction is implemented at all for the characteristic term for the steered angle.

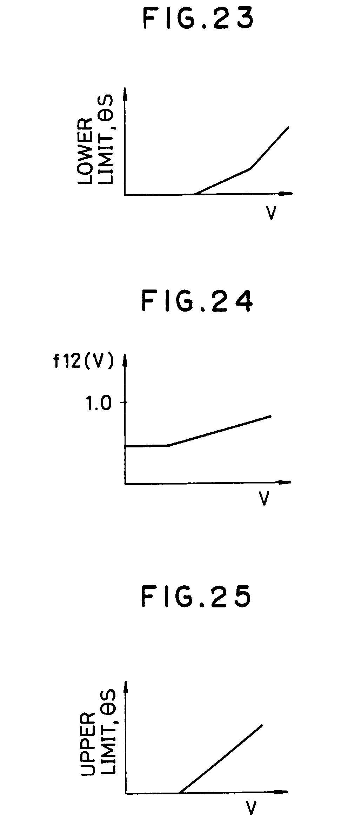

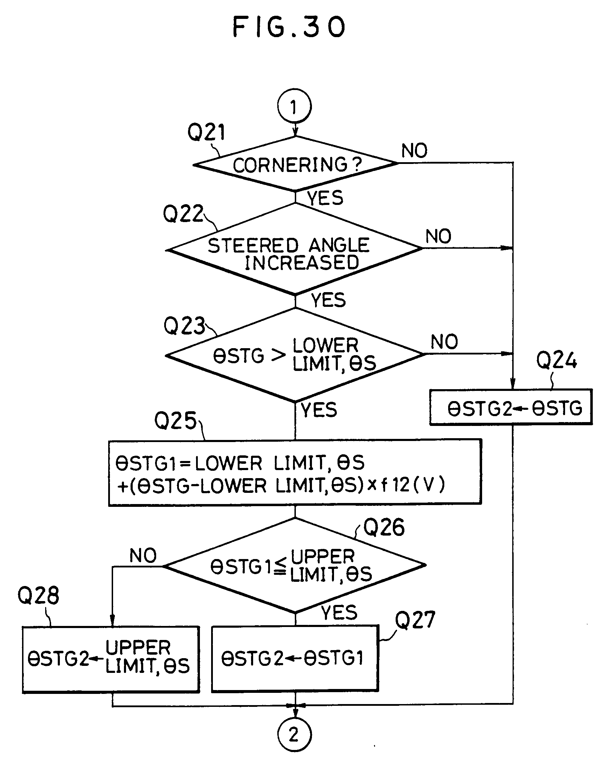

After step Q7, the program flow goes to step Q21 of Fig. 30. Fig. 30 is directed to the processing for correcting the target basic steering ratio θSTG determined at step Q7. In instances if the negative result would be given in either one of decision at step Q21 to determine if the vehicle is cornering, at step Q22 to determine if the steered angle is increased or at step Q23 to determine if the target basic steering ratio θSTG is larger than a lower limit of the steering ratio θS (see Fig. 23), then the program flow goes to step Q24 at which the target basic steering ratio θSTG determined at step Q7 is set to a second correction value θSTG2.

On the other hand, when the affirmative result is given by all decision at steps Q21, Q22 and Q23, that is, when the vehicle is cornering at step Q21, when the steered angle of the steering wheel is increased at step Q22, and when the target basic steering ratio θSTG is larger than the lower limit of the steering angle θS at step Q23, then the program flow goes to step Q25 at which a first correction value θSTG1 is determined in accordance with the formula as indicated at step Q25. The processing at step Q25 is adapted to correct the steering ratio θS for decreasing the quantity of the same phase to a substantial extent.

After step Q25, it is decided at step Q26 to determine if the first correction value θSTG1 is equal to or smaller than an upper limit of the steering ratio θS (see Fig. 25). When the result of decision at step Q26 indicates that the first correction value θSTG1 is equal to or smaller than the upper limit of the steering ratio θS, on the one hand, then the program flow goes to step Q27 at which the first correction value θSTG1 is set as it is as the second correction value θSTG2. When the decision at step Q26 gives the negative result, then the program flow goes to step Q28 at which the upper limit of the steering ratio θS is set as the second correction value θSTG2.

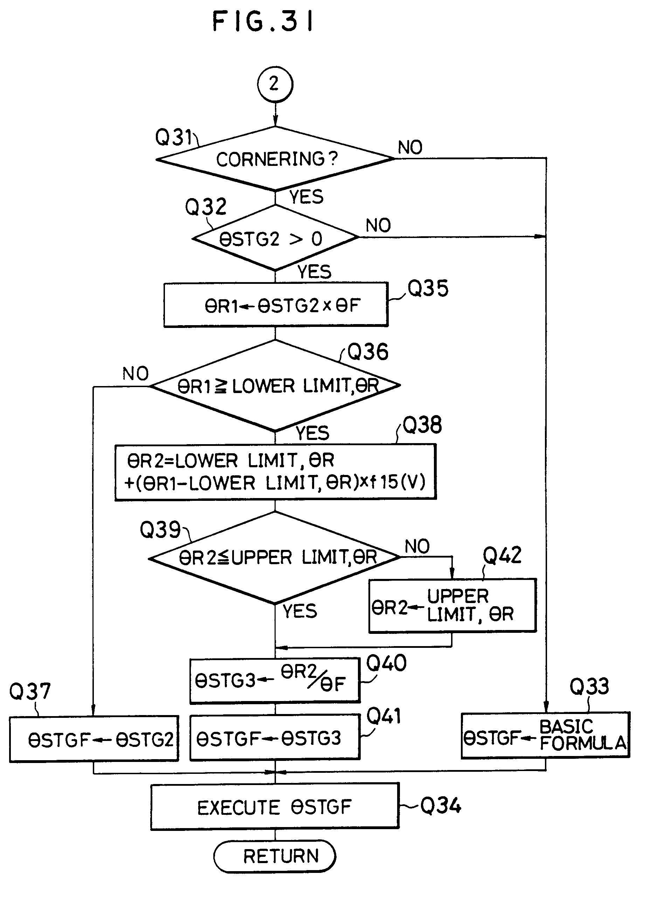

After step Q24, Q27 or Q28, the program flow goes to step Q31 of Fig. 31, at which a decision is made to determine if the vehicle is cornering at the current time. When it is decided at step Q31 that the vehicle is not cornering currently, then the program flow goes to step Q33 at which the steering ratio computed by the basic formula (4) is set as it is as a final target steering ratio θSTGF, followed by proceeding to step Q34 at which the steered angle of the rear wheel is realized in the manner corresponding to the final target steering ratio θSTGF. When it is decided at step Q31 that the vehicle is currently cornering, then the program flow goes to step Q32 and a decision is made to determine if the second correction value θSTG2 is larger than "0" in order to determine if the steering ratio θS is a steering ratio in the direction of the same phase. If the decision at step Q32 gives the negative result, then the program flow goes to step Q33. The processing at step Q33 is adapted to determine if the formula indicated at step Q25 in Fig. 30 is set to be suitable only for the direction of the same phase.

When it is decided at step Q32 that the second correction value θSTG2 is larger than "0", the processing is executed to make correction for preventing the steered angle of the rear wheel from being set too far in the direction of the same phase. At this end, a first target steered angle θR1 for the rear wheel is computed by multiplying the second correction value θSTG2 by the front-wheel steered angle θF.

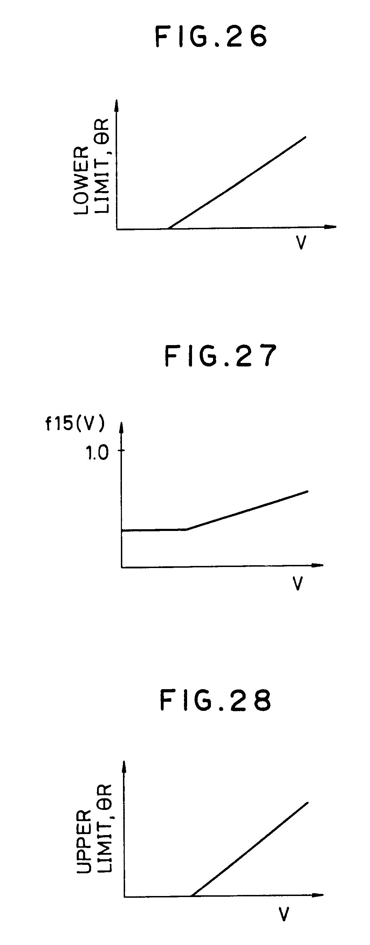

At step Q36, a decision is made to determine if the first target steered angle θR1 for the rear wheel is equal to or larger than a lower limit of the rear-wheel steered angle θR (see Fig. 26). When the decision at step Q36 gives the negative result, then the program flow goes to step Q37 at which the second correction value θSTG2 is set as the final target steering ratio θSTGF, followed by proceeding to step Q34.

On the other hand, when it is decided at step Q36 that the first target steered angle θR1 is equal to or larger than the lower limit of the rear-wheel steered angle θR, then the program flow goes to step Q38 at which a second target steered angle θR2 for the rear wheel is determined in accordance with the formula indicated at step Q38. It is to be noted herein that the second target steered angle θR2 is made smaller in the quantity of the same phase than the first target steered angle θR1.

After step Q38, the program flow goes to step Q39 at which a decision is made to determine if the second target steered angle θR2 is equal to or smaller than an upper limit of the rear-wheel steered angle θR (see Fig. 28). When the decision at step Q39 gives the positive result, then the program flow goes to step Q40 at which a third correction value θSTG3 is computed by dividing the second target steered angle θR2 by the front-wheel steered angle θF. Thereafter, at step Q41, the third correction value θSTG3 is set as the final target steering ratio θSTGF, followed by proceeding to step Q34. When it is decided at step Q39 that the second target steered angle θR2 is larger than the upper limit of the rear-wheel steered angle θR, then the program flow goes to step Q42 at which the upper limit of the rear-wheel steered angle θR is set as the second target steered angle θR2, followed by proceeding to step Q40.

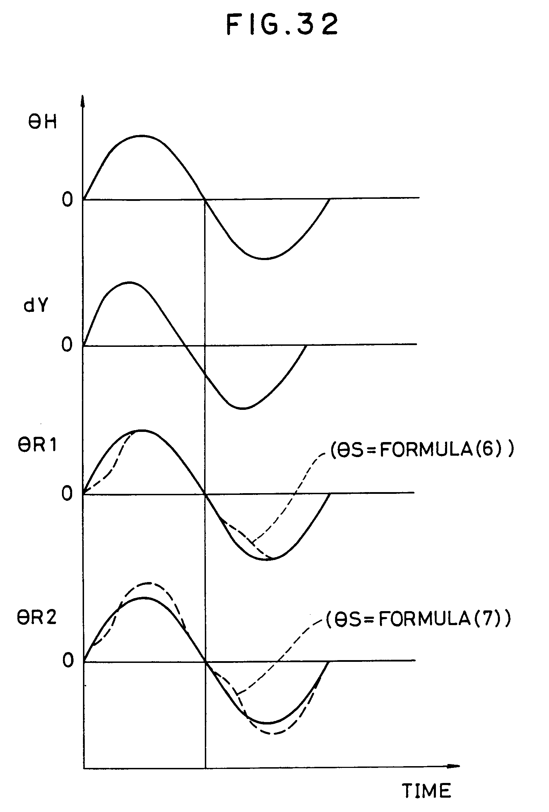

## Other Steering Characteristics by Yaw Acceleration (Fig. 32)

The steering characteristics having the characteristic term for the yaw acceleration may be set in an appropriate manner, in addition to the formula (4) above. For example, the steering characteristics may include the basic characteristic term, the characteristic term for the steered angle and the characteristic term for the yaw rate, and these characteristic terms may be set singly or in combination with any other terms. Further, the steering characteristics having the yaw acceleration may be indicated by the following formulas (6) to (11), inclusive.

$$\theta S = K1(V) - K4(V) \cdot |dY| \tag{6}$$

$$\theta S = K2(V) \cdot |\theta H| - K4(V) \cdot |dY| \tag{7}$$

$$\theta S = K3(V) \cdot |Y| - K4(V) \cdot |dY| \tag{8}$$

$$\theta S = K1(V) + K2(V) \cdot |\theta H| - K4(V) \cdot |dY| \tag{9}$$

$$\theta S = K1(V) + K3(V) \cdot |Y| - K4(V) \cdot |dY| \tag{10}$$

$$\theta S = K2(V) \cdot |\theta H| + K3(V) \cdot |Y| - K4(V) \cdot |dY| \tag{11}$$

It is further noted herein that the function K4(V) employed in each of the formulas (6), (7) and (9) can be replaced by the function K3(V).

Fig. 32 shows the examples of subjecting the steering wheel 30 to the so-called sine input, in which the case on the basis of the formula (6) is indicated as the first target steered angle $\theta$R1 and in which the case on the basis of the formula (7) is indicated as the second target steered angle $\theta$R2.

A description will be made of the first target steered angle $\theta$R1 in Fig. 32. As indicated by the broken line in Fig. 32, the yaw acceleration is caused to be raised quickly from the very first time when the steering wheel 30 starts turning, thereby improving the ability of turning the head of the vehicle. As the steering wheel starts returning toward its neutral position, the yaw acceleration becomes gradually smaller, thereby decreasing the action for decreasing the quantity of the same phase and as a consequence securing the stability. As the yaw acceleration is in a raised state immediately after the time has elapsed the point t1 at which the steering wheel is sustained in its neutral position, the ability of turning the head of the vehicle is improved. Further, as the yaw acceleration is decreased when the steering wheel is operatively turned toward its neutral position, the stability is secured.

As shown in Fig. 32, the second target steered angle $\theta$R2 is made larger in the quantity of the same phase than the first target steered angle $\theta$R1, as shown by the broken line, thereby improving the stability to a higher extent.

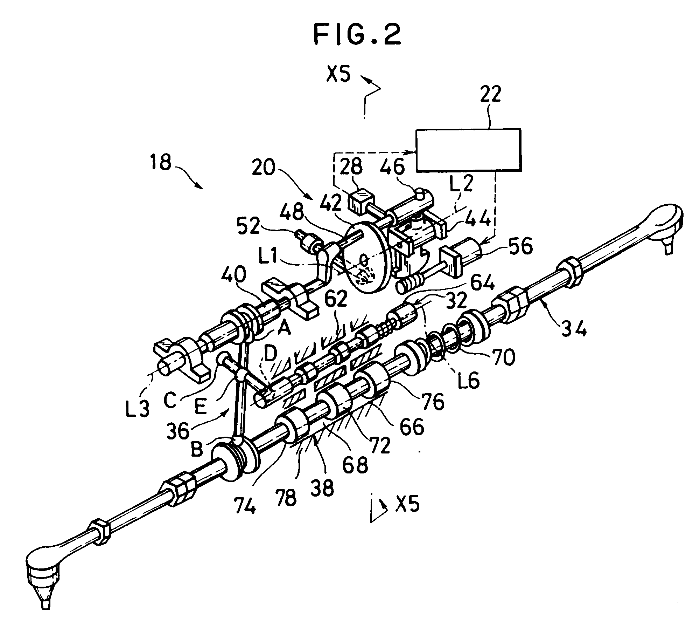

## Steering-Ratio Changing Mechanism (Figs. 2-4)

A description will now be made of an example of the steering-ratio changing mechanism 20 for altering the steering ratio and a peripheral mechanism therefor.

As shown in Fig. 2, the rear wheel steering mechanism 18 has the steering-angle changing mechanism 20 incorporated thereinto, and the rear wheel steering mechanism 18 comprises a hydraulic shift valve 32, a rear wheel steering rod 34, displacement transmitting means 36 and a hydraulic power cylinder 38.

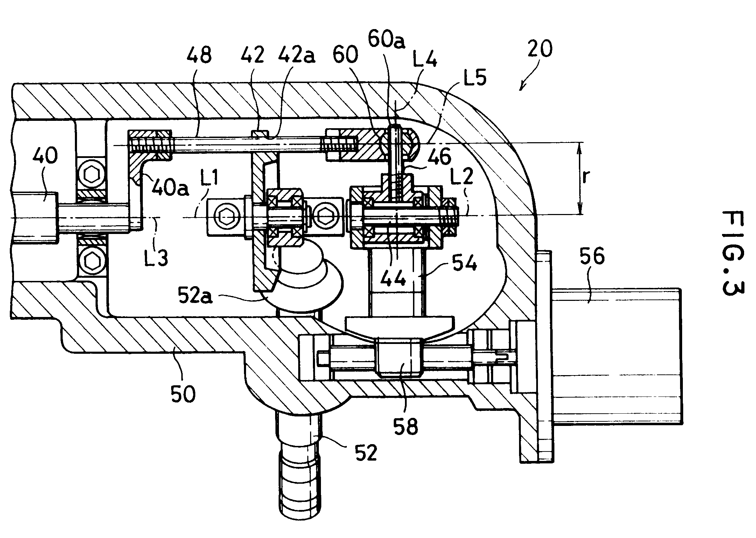

The steering-angle changing mechanism 20 comprises an output rod 40, a bevel gear 42, a pivotable shaft member 44, a pendulum arm 46 and a connecting rod 48. These elements are accommodated in a casing 50 in the manner as shown in Fig. 3.

The output rod 40 is supported by the casing 50 so as to be slidable in the direction of the shaft line L3 and the stroke of the output rod 40 is displaced in the direction of the shaft line L3, thereby allowing the rear wheel steering rod 34 to be displaced in the direction of the shaft (in the transverse direction of the vehicle) by the aid of the displacement transmitting means 36 and steering the rear wheels (not shown) interconnected to the both end portions of the rear wheel steering rod 34.

The bevel gear 42 is supported by the casing 50 so as to be rotatable about the shaft line L1 concentric with the shaft line L3 of the output rod 40. The bevel gear 42 is arranged so as to rotate about the shaft line L1 in association with the steering of the steering wheel which rotates a pinion 52a at the rear end portion of a transmitting shaft 52 engaged with the bevel gear 42. In other words, the front wheel steered angle $\theta$F is entered from the front wheel steering mechanism 14 through the transmitting shaft 52 into the rear wheel steering mechanism 18.

The pivotable shaft member 44 has a shaft line L2 which is concentric with the shaft line L3 of the output rod 40 and is secured to a pivotable gear 54. The pivotable gear 54 in turn is engaged with a worm gear 58 pivotable by the drive of a servo motor 56 controllable by the control unit 22, so as to rotate about the shaft line perpendicular to the plane of this drawing crossing the shaft line L2. The pivotable shaft member 44 rotates in association with the rotation of the rotary gear 54.

The pendulum arm 46 is connected with the pivotable shaft member 44 so as to be pivotable about the shaft line L2 of the pivotable shaft member 44. The position in which the pendulum arm 46 is interconnected with the pivotable shaft member 44 is determined so as to allow the shaft line L4 of the pendulum arm 46 to pass through a point of intersection of the pivotable shaft line L6 of the pivotable shaft member 44 with the shaft line L2 thereof.

The connecting rod 48 has a shaft line L5 parallel to the shaft line L3 of the output rod 40 and it connects the output rod 40 with the bevel gear 42 and the pendulum arm 46. The connection of the connecting rod 48 with the output rod 40 is made by threading one end portion of the connecting rod 48 with a lever 40a secured to an end portion of the output rod 40. The connecting rod 48 is connected with the bevel gear 42 by slidably inserting the other end portion of the connecting rod 48 into a through hole 42a formed in the bevel gear 42 in the distance r from the shaft line L1 of the bevel gear 42. In addition, the connection of the connecting rod 48 with the pendulum arm 46 is made by slidably inserting the pendulum arm 46 into a through hole 60a formed in a ball joint member 60 disposed rotatably in all directions at the end portion of the connecting rod 48.

The connecting rod 48 is fixed to the output rod 40, although it is slidable relative to the bevel gear 42 in the direction of the shaft line L5, i.e. the shaft line L3, as well as relative to the pendulum arm 46 in the direction of the shaft line 4, i.e. in the direction perpendicular to the shaft line L3 in the state as shown in the drawing. It is noted herein that the shaft line L4 of the pendulum arm 46 leans relative to the direction perpendicular to the shaft line L3 by the pivotal movement of the pivotable shaft member 44 and the pendulum arm 46 pivots in this lean direction. In this case, too, the component of force in the direction perpendicular to the shaft line L3 out of the force to be transmitted from the pendulum arm 46 to the connecting rod 48 is absorbed at the connected point, because the pendulum arm 46 can slide in the direction perpendicular to the shift line L3 relative to the ball joint member 60 and because the pivotal movement of the ball joint member 60 allows the angle formed between the shaft line L4 and the shaft line L5 to change. This arrangement can allow a movement of the pendulum arm 46 in the perpendicular direction relative to the connecting rod 48.

As the pendulum arm 46 of the steering-ratio changing mechanism 20 is connected with the connecting rod 48 so as to be movable relatively with each other in the direction perpendicular to the shaft line L3 in the manner as described hereinabove, the connecting point at which the pendulum arm 46 is connected with the connecting rod 48 is drawn as a circular locus or an oval locus on an external surface of a cylinder having a radius r concentric with the shaft line L3, when the pendulum arm 46 pivots.

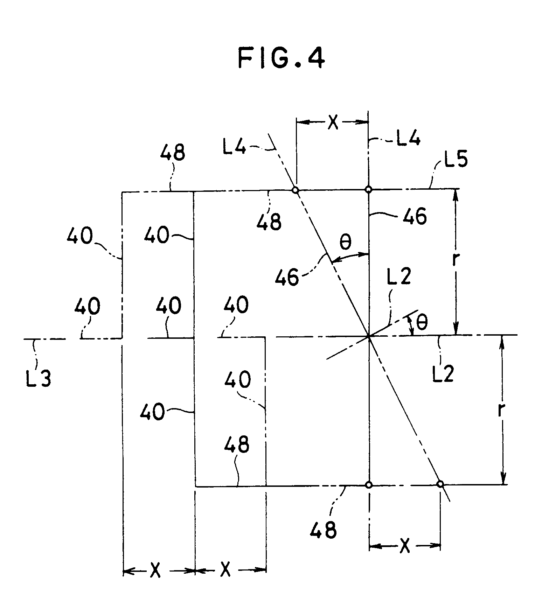

Fig. 4 shows the state in which the output rod 40 displaces when the shaft line L2 of the pivotable shaft member 44 is leaned at an angle θ relative to the shaft line L3 of the output rod 40, i.e. when the shaft line L4 of the pendulum arm 46 is leaned at the angle θ relative to the direction perpendicular to the shaft line L3. As is apparent from Fig. 4, even if the pendulum arm 46 would pivot to the left or to the right, the connecting point of the pendulum arm 46 with the connecting rod 48 displaces in the distance as indicated by "S" in the direction of the shaft line L3 when the quantity of a left-hand pivotal movement of the pendulum arm 46 is equal to the quantity of a right-hand pivotal movement thereof. Further, as the output rod 40 is connected and fixed to the connecting rod 48, the output rod 40 displaces in the distance S in either of the left-hand or right-hand direction of the shaft line L3.

The quantity "X" in which the output rod 40 displaces to the right or to the left, as shown in Fig. 4, becomes equal to each other, if the quantity in which the pendulum arm 46 swings to the left and to the right would be equal to each other. It is to be noted herein that the quantity X itself varies with the magnitude of the angle θ of inclination of the pendulum arm 46 even if the quantity in which the steering wheel is steered would be the same and the quantity in which the bevel gear 42 rotates in association with the steering of the steering wheel would be the same. Hence, the steered ratio θS representing a ratio of the rear wheel steered angle θR to the front wheel steered angle θF is set or altered by setting or altering the magnitude of the angle θ of inclination of the pendulum arm 46 by the aid of an operation of the servo motor 56. Further, the pivotable shaft member 44 is so arranged as to lean in the clockwise direction as well as in the counterclockwise direction in the manner as described hereinabove, and the direction of moving the output rod 40 relative to the rotation of the bevel gear 42 is inverted when the pivotable shaft member 44 is leaned in the clockwise direction. This reverse movement of the output rod 40 allows the steering wheel to steer the rear wheels to the same phase or to the reverse phase relative to the front wheels.

Referring again to Fig. 2, the steering ratio θS set and altered by the steering-ratio changing mechanism 20 is detected on the basis of the angle θ of inclination of the pivotable shaft member 44 by means of a steering ratio sensor 28 mounted to the pivotable shaft member 44.

A description will now be made of the other parts other than the steering-ratio changing mechanism 20.

The hydraulic shift valve 32 comprises a valve housing 62 and a spool 64 accommodated within the valve housing 62 so as to be displaced relative to the valve housing 62 in the direction of the shaft line L6 parallel to the shaft line L3 of the output rod 40. The spool 64 is arranged so as to be displaced through the displacement transmitting means 36 by the output rod 40 and the rear wheel steering rod 34. The displacement of the spool 64 controls a supply of hydraulic pressure to the hydraulic power cylinder 38. In other words, the hydraulic pressure is supplied to a right-hand oil chamber 66 of the hydraulic power cylinder 38 when the spool 64 is displaced from the neutral position to the right relative to the valve housing 62. On the other hand, the hydraulic pressure is supplied to a left-hand oil chamber 68 of the hydraulic power cylinder 38 when the spool 64 is displaced from the neutral position to the left relative to the valve housing 62.

The rear wheel steering rod 34 is disposed extending in the transverse direction of the vehicle parallel to the shaft line L3 of the output rod 40 and is displaced in the transverse direction to steer the rear wheels interconnected to the left-hand and right-hand ends of the rear wheel steering rod 34 through a tie rod and a knuckle arm, although not shown in the drawings. The rear wheel steering rod 34 is displaced by the aid of hydraulic force of the hydraulic power cylinder 38. A centering spring 70 is provided with the rear wheel steering rod 34 as fail-safe measures in case of disappearance of hydraulic pressure due to damages or failure of a hydraulic system of the hydraulic shift valve 32 and the hydraulic power cylinder 38 or in case of a loss of hydraulic pressure from the hydraulic power cylinder 38 due to damages or failure of a mechanical system of a rear wheel steering unit 10 and due to the opening of the hydraulic system to a drain. The centering spring 70 aligns the rear wheel steering rod 34 in its neutral position, i.e. in the position in which the rear wheels are not steered and are in a straight running state.

The hydraulic power cylinder 38 displaces the rear wheel steering rod 34 in the transverse direction of the vehicle by the aid of its hydraulic power. To the rear wheel steering rod 34 is directly fixed a piston 72, and a left-hand sealing member 74 for forming the left-hand oil chamber 68 is disposed at the left-hand side of the piston 72, while a right-hand sealing member 76 for forming the right-hand oil chamber 66 is disposed at the right-hand side of the piston 72. The left-hand and right-hand sealing members 74 and 76 are secured to a valve housing 78 of the hydraulic power cylinder 38 so as to be slidable relative to the rear wheel steering rod 34.

The displacement transmitting means 38 is engaged with the output rod 40, the spool 64 and the rear wheel steering rod 34 and operated in the direction so as to displace the spool in a predetermined direction when the output rod 40 is displaced. Further, by the displacement of the rear wheel steering rod 34 to be caused when the spool 64 is displaced, the displacement transmitting means 38 is operated in the direction in which the spool 64 is displaced in the direction opposite to the aforesaid direction.

In other words, the displacement transmitting means 36 is composed of a cross lever consisting of a longitudinal lever and a transverse lever. One end A of the longitudinal lever is secured to the output rod 40, while the other end B thereof is secured to the rear wheel steering rod 34. On the other hand, one end C of the transverse lever is fixed to a casing of the rear wheel steering unit 10 secured to the body of the vehicle, while the other end D thereof is engaged with the spool 64. Each of the ends A, B, C and D is disposed so as to be unmovable relative to the output rod 40, the rear wheel steering rod 34 and the spool 64 in the direction of the respective shaft lines, yet movable or rotatable in the other directions. The end C of the transverse lever is engaged so as to be rotatable with the aid of a ball joint yet untransferable.

As described hereinabove, the system according to the embodiment of the present invention allows the rear wheels connected to both end portions of the rear wheel steering rod 34 to be steered by displacing the rear wheel steering rod 34 in its axial direction via the displacement transmitting means 36 by displacing the stroke of the output rod 40 in the direction of the shaft line L3. A description on the principle of the operation for transmitting the steering quantity will be omitted from the following specification because the principle has nothing to do directly with the present invention and it is disclosed in detail in Japanese Patent Laid-open Publication (kokai) No. 1-273,772.

## Variant of Steering-Ratio Changing Mechanism (Fig. 32)

Fig. 32 shows a modification of the steering-ratio changing mechanism 20, in which the same elements are provided with the same reference symbols, and a description of those elements will omitted from the description which follows.

Referring to Fig. 32, a pivotal gear 54 is disposed to project in the direction that deviates from the aforesaid embodiment at the angle of 90°. When the motor 56 rotates in the normal direction or in the reverse direction, the worm gear 58 rotates, thereby allowing the pivotal gear 54 to pivot and as a consequence causing the pivotal arm 46 to pivot about its shaft line L4. It is noted that Fig. 32 shows the state in which the front wheels are located in their neutral positions. In this state, the ball joint member 60 is not displaced at all in the direction of the shaft line L5 and the rear wheels are not steered even if the shaft line L2 pivots about the shaft line L5 by swinging the pivotal arm 46 about the shaft line L4. In other words, the rear wheels are always kept in the neutral positions as long as the front wheels are located in their neutral positions. The rear wheels are steered when the front wheels are steered in a state in which the pivotal arm 46 pivots about the shaft line L4 so as for the shaft line L2 to lean relative to the shaft line L5.

## Claims

1. A system for steering rear wheels (16) of an automotive vehicle having a mechanism (14) for steering front wheels (12) and a mechanism (18) for steering rear wheels, so adapted as to control a quantity of operation of the mechanism (18) for steering the rear wheels (16) to give a target steering ratio obtainable on the basis of pre-determined steering characteristics, which comprises detection means (24, 25, 26, 28) for detecting a state of operating a steering wheel (30)
   **characterized in that**
   it further comprises correction means (20), (22) for correcting the quantity of operation of said mechanism (18) for steering the rear wheels (16) when a turn of the steering wheel (30) from its left-hand or right-hand steered state to its neutral state is detected.

2. A system as claimed in claim 1, wherein:
   said detection means (24, 25, 26, 28) for detecting the state of operating the steering wheel (30) is adapted to detect a turn of a steering wheel (30) so as to operatively turn the steering wheel (30) from its right or left position through its neutral position to the opposite position; and
   said correction means (20, 22) is adapted to correct a steered angle of the rear wheel (16) in the direction of a reverse phase.

3. A system as claimed in claim 1, wherein:
   said detection means (24, 25, 26, 28) for detecting the state of operating the steering wheel (30) is adapted to detect a turn of a steering wheel (30) so as to operatively turn the steering wheel (30) from its right or left position toward its neutral position; and
   said correction means (20, 22) is adapted to correct a steered angle of the rear wheel (16) in the direction of a same phase.

4. A system as claimed in claim 1, wherein;
said detection means (24, 25, 26, 28) for detecting the state of operating the steering wheel (30) comprises first detection means for detecting a turn of the steering wheel (30) from its right or left position through its neutral position to the opposite position and second detection means for detecting a turn of the steering wheel (30) from its right or left position toward its neutral position; and
said correction means (20, 22) comprises first correction means for correcting a steered angle of the rear wheel (30) in the direction of a reverse phase when the turn of the steering wheel (30) from its right or left position through its neutral position to the opposite position is detected by said first detection means and second correction means for correcting the steered angle of the rear wheel (16) in the direction of a same phase when the turn of the steering wheel (30) from its right or left position toward its neutral position is detected by said second detection means.

5. A system as claimed in claim 1, further comprising:

an interconnecting mechanism (52) for mechanically interconnecting said mechanism (14) for steering the front wheels (12) with said mechanism (18) for steering the rear wheels (16); and
a steering-ratio changing mechanism (20) for changing a steering ratio, which is incorporated into said interconnecting mechanism (52);

wherein said steering characteristics are provided with a basic characteristic term and a characteristic term for a yaw rate for decreasing a quantity of a same phase to a smaller extent as the yaw rate becomes larger, so as to converge the yaw rate acting upon a body of the vehicle.

6. A system as claimed in claim 5, wherein:
said detection means (24, 25, 26, 28) for detecting the state of operating the steering wheel (30) is adapted to detect a turn of the steering wheel (30) so as to operatively turn the steering wheel from its right or left position through its neutral position to the opposite position; and
said correction means (20, 22) is adapted to correct the basic steering ratio determined by the basic characteristic term so as to decrease the quantity of the same phase.

7. A system as claimed in claim 6, wherein said correction means (20, 22) is adapted to correct the steering ratio to be determined by said steering characteristics.

8. A system as claimed in claim 7, wherein said detection (24, 25, 26, 28) means is adapted to detect the turn of the steering wheel (30) from its right or left position through its neutral position to the opposite position on the basis of a steered angle of the steering wheel (30) and an angular velocity of the steered angle.

9. A system as claimed in claim 6, wherein said correction means (20, 22) is adapted to implement correction only when an angular velocity of a steered angle is larger than a predetermined value.

10. A system as claimed in claim 6, wherein said correction means (20, 22) is adapted to change the characteristic term for the yaw rate so as to decrease the same phase by reversing a negative or positive sign of a control gain of said characteristic term for the yaw rate to the opposite sign.

11. A system as claimed in claim 6, wherein said detection means (24, 25, 26, 28) is adapted to detect the turn of the steering wheel (30) from its right or left position through its neutral position to the opposite position when the direction in which the steering wheel (30) is operatively turned is opposite to the direction in which the yaw rate occurs.

12. A system as claimed in claim 10, wherein said steering characteristics are set by the following formula:

$$\theta S = C1 + C2 \cdot Y$$

where

$\theta S$      is the steering ratio;
C1      is the basic characteristic term;
C2      is a control gain; and

Y        is the yaw rate;

wherein said negative or positive sign of the control gain of said characteristic term for the yaw rate is set in such a manner that the control gain C2 is provided with a negative or positive sign so as to increase the quantity of the same phase as the yaw rate Y becomes larger when the steering wheel (30) is operatively turned in the direction to the left or to the right from its neutral position, on the one hand, and that the control gain C2 is provided with the opposite sign when the steering wheel is operatively turned in the opposite direction from its neutral position, on the other hand.

13. A system as claimed in claim 6, wherein an amount of correction by said correction means is set in accordance with an angular velocity of a steered angle.

14. A system as claimed in claim 13, wherein:
said detection means is adapted to detect the turn of the steering wheel (30) from its right or left position toward its neutral position; and
said correction means is adapted to correct said steering characteristics so as to increase the quantity of the same phase when the turn of the steering wheel (30) from its right or left position toward its neutral position is detected by said detection means (25, 25, 26, 28).

15. A system as claimed in claim 14, wherein said detection means (24, 25, 26, 28) is adapted to detect the turn of the steering wheel (30) from its left or right position toward its neutral position on the basis of the steered angle of the steering wheel (30) and the angular velocity of the steered angle.

16. A system as claimed in claim 14, wherein an amount of correction by said correction means (20, 22) is set in accordance with the angular velocity of the steered angle.

17. A system as claimed in claim 5, wherein:
said detection means (24, 25, 26, 28) comprises the first detection means for detecting the turn of the steering wheel from its left or right position toward its neutral position and second detection means for detecting a position of the steering wheel which increases from its neutral position; and
said correction means (20, 22) comprises first correction means for correcting the steering characteristics so as to increase the same phase when the turn of the steering wheel (30) from its right or left position toward its neutral position is detected by said first detection means and second correction means for correcting the steering characteristics so as to decrease the same phase when the position of the steering wheel (30) increasing from its neutral position is detected by said second detection means.

18. A system as claimed in claim 17, wherein said second detection (24, 25, 26, 28) means is adapted to detect an increase in the steered angle of the steering wheel (30) on the basis of the steered angle of the steering wheel (30) and the angular velocity of the steered angle.

19. A system as claimed in claim 5, wherein said basic characteristic term is set by using a vehicle speed and the steered angle of the steering wheel (30) as parameters.

20. A system as claimed in claim 5, wherein:
said detection means (24, 25, 26, 28) is adapted to detect yaw acceleration caused to occur upon a body of a vehicle in accordance with operation of the steering wheel (30); and
said steering characteristics contain a characteristic term for the yaw acceleration, which is set so as to decrease a quantity of a same phase as the yaw acceleration becomes larger.

21. A system as claimed in claim 20, wherein said steering characteristics further contain a characteristic term for the steered angle for decreasing the quantity of the same phase as the steered angle of the steering wheel becomes larger.

22. A system as claimed in any one of claims 5 to 21, wherein a mechanical configuration of said steering-ratio changing mechanism is set so as to sustain the rear wheels (16) in the neutral positions when the front wheels (12) are sustained in the neutral positions.

23. A system as claimed in claim 1, wherein said steering characteristics are set to have a characteristic term for yaw acceleration for decreasing a quantity of a same phase as the yaw acceleration becomes larger.

24. A system as claimed in claim 23, wherein said steering characteristics further contain at least one another characteristic term, in addition to the characteristic term for the yaw acceleration.

25. A system as claimed in claim 24, wherein said another characteristic term is the basic characteristic term set by using a vehicle speed as a parameter.

26. A system as claimed in claim 24, wherein said another characteristic term is the characteristic term for the steered angle for increasing the quantity of the same phase as the steered angle of the steering wheel (30) becomes larger.

27. A system as claimed in claim 24, wherein said another characteristic term is the characteristic term for the yaw rate for increasing the quantity of the same phase as the yaw rate becomes larger.

28. A system as claimed in claim 24, wherein said another characteristic term is a combination of the basic characteristic term set by using a vehicle speed as a parameter with the characteristic term for the steered angle for increasing the quantity of the same phase as the steered angle of the steering wheel (30) becomes larger.

29. A system as claimed in claim 24, wherein said another characteristic term is a combination of the basic characteristic term set by using a vehicle speed as a parameter with the characteristic term for the yaw rate for increasing the quantity of the same phase as the yaw rate becomes larger.

30. A system as claimed in claim 24, wherein said another characteristic term is a combination of the characteristic term for the steered angle for increasing the quantity of the same phase as the steered angle of the steering wheel (30) becomes larger with the characteristic term for the yaw rate for increasing the quantity of the same phase as the yaw rate becomes larger.

31. A system as claimed in claim 24, wherein said another characteristic term is a combination of the basic characteristic term set by using a vehicle speed as a parameter with the characteristic term for the steered angle for increasing the quantity of the same phase as the steered angle of the steering wheel (30) becomes larger and the characteristic term for the yaw rate for increasing the quantity of the same phase as the yaw rate becomes larger.

32. A system as claimed in claim 31, further comprising correction means for correcting said steering characteristics in accordance with the state in which a vehicle is running, so as to decrease the quantity of the same phase to be computed by said characteristic term for the steered angle.

33. A system as claimed in claim 32, wherein said correction means is adapted to inhibit operation by said characteristic term for the steered angle to thereby bring the steering characteristics into a state in which no characteristic term for the steered angle is contained.

34. A system as claimed in claim 33, wherein the operation of the characteristic term for the steered angle is inhibited when the vehicle is cornering.

35. A system as claimed in claim 33, further comprising decision means for deciding a requirement for the ability of turning a head of a vehicle on the basis of the steered angle and the yaw rate;
wherein the operation of the characteristic term for the steered angle is inhibited when the requirement for the ability of turning the head of the vehicle is decided by said decision means.

36. A system as claimed in claim 31, further comprising target steering-ratio correcting means for correcting a target steering ratio determined on the basis of said steering characteristics so as to decrease the quantity of the same phase when the steered angle of the steering wheel (30) is increased.

37. A system as claimed in claim 36, further comprising means for correcting the steered angle of the rear wheel (16), obtainable on the basis of a steered angle of the front wheel (12) and the target steering ratio corrected by said target steering-ratio correcting means so as to decrease the quantity of the same phase.

38. A system as claimed in any one of claims 23 to 37, further comprising:

an interconnecting mechanism (52) for mechanically interconnecting said mechanism (14) for steering the front wheels (12) with said mechanism (18) for steering the rear wheels (16); and
a steering-ratio changing mechanism (20) for changing the steering ratio of the rear wheel (16), which is incorporated into said interconnecting mechanism (52);

wherein said steering ratio is controlled by controlling said steering-ratio changing mechanism (20).

39. A system as claimed in claim 38, wherein a mechanical configuration of said steering-ratio changing mechanism (20) is set so as to sustain the rear wheels (16) in the neutral positions when the front wheels (12) are sustained in the neutral positions.

## Patentansprüche

1. System zur Lenkung der Hinterräder (16) eines Kraftfahrzeugs, das eine Einrichtung (14) zur Lenkung der Vorderräder (12) und eine Einrichtung (18) zur Lenkung der Hinterräder aufweist, die so ausgeführt sind, daß ein Ausmaß des Eingriffs der Einrichtung (18) zur Lenkung der Hinterräder (16) so gesteuert wird, daß ein Ziellenkverhältnis auf Basis vorbestimmter Lenkcharakteristiken erhalten wird, und das eine Erfassungseinrichtung (24, 25, 26, 28) zur Erfassung eines Einschlags eines Lenkrades (30) hat;
dadurch gekennzeichnet, daß
es des weiteren eine Korrektureinrichtung (20, 22) zur Korrektur des Ausmaßes des Eingriffs der Einrichtung (18) zur Lenkung der Hinterräder (16) aufweist, wenn eine Drehung des Lenkrades (30) von einem Linkseinschlag oder Rechtseinschlag in die Mittelstellung erkannt wird.

2. System nach Anspruch 1, bei dem:
die Erfassungseinrichtung (24, 25, 26, 28) zur Erfassung des Einschlags des Lenkrades (30) so ausgeführt ist, daß sie eine Drehung des Lenkrades (30) erkennt, wenn das Lenkrad (30) aus einem Rechtseinschlag oder Linkseinschlag über die Mittelstellung in die Gegenrichtung gedreht wird; und
die Korrektureinrichtung (20, 22) so ausgeführt ist, daß ein Lenkwinkel der Hinterräder (16) gegenphasig korrigiert wird.

3. System nach Anspruch 1, bei dem:
die Erfassungseinrichtung (24, 25, 26, 28) zur Erfassung des Einschlags des Lenkrades (30) so ausgeführt ist, daß sie eine Drehung des Lenkrades (30) erkennt, wenn das Lenkrad (30) aus einem Rechtseinschlag oder Linkseinschlag in Richtung der Mittelstellung gedreht wird; und
die Korrektureinrichtung (20, 22) so ausgeführt ist, daß der Lenkwinkel der Hinterräder (16) gleichphasig korrigiert wird.

4. System nach Anspruch 1, bei dem:
die Erfassungseinrichtung (24, 25, 26, 28) zur Erfassung des Einschlags des Lenkrades (30) eine erste Erfassungseinrichtung, die eine Drehung des Lenkrades (30) aus einem Rechtseinschlag oder Linkseinschlag über die Mittelstellung in die Gegenrichtung erkennt, und eine zweite Erfassungseinrichtung zur Erfassung einer Drehung des Lenkrades (30) aus einem Rechtseinschlag oder Linkseinschlag in Richtung der Mittelstellung enthält; und
die Korrektureinrichtung (20, 22) eine erste Korrektureinrichtung für die gegenphasige Korrektur eines Lenkwinkels der Hinterräder (16) enthält, wenn die Drehung des Lenkrades (30) aus einem Rechts- oder Linksausschlag über die Mittelstellung in die Gegenrichtung durch die erste Erfassungseinrichtung erkannt wird, und eine zweite Korrektureinrichtung für die gleichphasige Korrektur des Lenkwinkels der Hinterräder (16), wenn die Drehung des Lenkrads (30) aus einem Rechts- oder Linksausschlag in Richtung der Mittelstellung durch die zweite Erfassungseinrichtung erkannt wird.

5. System nach Anspruch 1, des weiteren umfassend:

eine Verbindungseinrichtung (52) zur mechanischen Verbindung der Einrichtung (14) zur Lenkung der Vorderräder (12) mit der Einrichtung (18) zur Lenkung der Hinterräder (16); und

eine Einrichtung (20) zur Veränderung des Lenkverhältnisses, um das Lenkverhältnis zu verändern, die in die Verbindungseinrichtung (52) einbezogen ist;

wobei die Lenkcharakteristiken durch einen Ausdruck für die Grundcharakteristik und einen charakteristischen Ausdruck für eine Gierrate festgelegt werden, um ein Ausmaß eines gleichphasigen Lenkausschlags auf einen geringeren Betrag zu verringern, wenn die Gierrate größer wird, so daß die Gierrate des Fahrzeugkörpers konvergiert.

6. System nach Anspruch 5, bei dem:

die Erfassungseinrichtung (24, 25, 26, 28) zur Erfassung des Einschlags des Lenkrades (30) so ausgeführt ist, daß sie eine Drehung des Lenkrades (30) erkennt, wenn das Lenkrad aus einem Rechtseinschlag oder Linkseinschlag über die Mittelstellung in die Gegenrichtung gedreht wird; und

die Korrektureinrichtung (20, 22) so ausgeführt ist, daß das durch den Ausdruck für die Grundcharakteristik bestimmte Grundlenkverhältnis korrigiert wird, um das Ausmaß des gleichphasigen Eingriffs zu verringern.

7. System nach Anspruch 6, bei dem die Korrektureinrichtung (20, 22) so ausgeführt ist, daß das Lenkverhältnis entsprechend den Lenkcharakteristiken korrigiert wird.

8. System nach Anspruch 7, bei dem die Erfassungseinrichtung (24, 25, 26, 28) so ausgeführt ist, daß sie eine Drehung des Lenkrades (30) aus einem Rechtseinschlag oder Linkseinschlag über die Mittelstellung in die Gegenrichtung anhand eines Einschlagwinkels des Lenkrades (30) und einer Winkelgeschwindigkeit des Lenkwinkels erkennt.

9. System nach Anspruch 6, bei dem die Korrektureinrichtung (20, 22) so ausgeführt ist, daß sie nur dann eine Korrektur vornimmt, wenn die Winkelgeschwindigkeit des Lenkwinkels größer ist als ein vorbestimmter Wert.

10. System nach Anspruch 6, bei dem die Korrektureinrichtung (20, 22) so ausgeführt ist, daß sie den charakteristischen Ausdruck für die Gierrate ändert, um die gleichphasige Reaktion zu reduzieren, indem ein negatives oder positives Vorzeichen einer Regelverstärkung des charakteristischen Ausdrucks für die Gierrate umgekehrt wird.

11. System nach Anspruch 6, bei dem die Erfassungseinrichtung (24, 25, 26, 28) so ausgeführt ist, daß sie eine Drehung des Lenkrades (30) aus einem Rechtseinschlag oder Linkseinschlag über die Mittelstellung in die Gegenrichtung erkennt, wenn die Drehrichtung des Lenkrades (30) der Richtung der auftretenden Gierrate entgegengesetzt ist.

12. System nach Anspruch 10, bei dem die Lenkcharakteristiken durch die folgende Formel gegeben sind:

$$\theta S = C1 + C2 \cdot Y$$

wobei:

$\theta S =$      Lenkverhältnis
$C1 =$      Ausdruck Grundcharakteristik
$C2 =$      Regelverstärkung
$Y =$      Gierrate;

wobei das negative oder positive Vorzeichen der Regelverstärkung des charakteristischen Ausdrucks für die Gierrate derart gesetzt wird, daß die Regelverstärkung C2 so mit einem positiven oder negativen Vorzeichen versehen ist, daß das gleichphasige Ausmaß mit der Gierrate Y zunimmt, wenn einerseits das Lenkrad (30) gegenüber der Mittelstellung nach links oder rechts eingeschlagen wird, und andererseits die Regelverstärkung C2 mit dem umgekehrten Vorzeichen versehen wird, wenn das Lenkrad aus der Mittelstellung in Gegenrichtung eingeschlagen wird.

13. System nach Anspruch 6, bei dem das Ausmaß des Korrektureingriffs durch die Korrektureinrichtung entsprechend der Winkelgeschwindigkeit des Lenkwinkels eingestellt wird.

14. System nach Anspruch 13, bei dem:

die Erfassungseinrichtung so ausgeführt ist, daß sie eine Drehung des Lenkrades (30) aus einem Rechtseinschlag oder Linkseinschlag in Richtung der Mittelstellung erkennt; und

die Korrektureinrichtung so ausgeführt ist, daß die Lenkcharakteristiken verändert werden, um das Ausmaß des gleichsinnigen Eingriffs zu vergrößern, wenn die Drehung des Lenkrades (30) aus einem Rechtseinschlag oder einem Linkseinschlag in Richtung der Mittelstellung durch die Erfassungseinrichtung (24, 25, 26, 28) erkannt wird.

**15.** System nach Anspruch 14, bei dem die Erfassungseinrichtung (24, 25, 26, 28) so ausgeführt ist, daß die Drehung des Lenkrades (30) aus einem Linkseinschlag oder einem Rechtseinschlag in Richtung der Mittelstellung auf Basis des Lenkwinkels des Lenkrades (30) und der Winkelgeschwindigkeit des Lenkwinkels erkannt wird.

**16.** System nach Anspruch 14, bei dem das Ausmaß der Korrektur durch die Korrektureinrichtung (20, 22) entsprechend der Winkelgeschwindigkeit des Lenkwinkels eingestellt wird.

**17.** System nach Anspruch 5, bei dem:

die Erfassungseinrichtung (24, 25, 26, 28) die erste Erfassungseinrichtung zur Erkennung einer Drehung des Lenkrades aus einem Linkseinschlag oder einem Rechtseinschlag in Richtung der Mittelstellung und die zweite Erfassungseinrichtung zur Erkennung einer Stellung des Lenkrades, die aus der Mittelstellung zunimmt, umfaßt; und

die Korrektureinrichtung (20, 22) eine erste Korrektureinrichtung zur Korrektur der Lenkcharakteristiken umfaßt, durch die der gleichphasige Eingriff vergrößert wird, wenn die Drehung des Lenkrades (30) aus dem Rechtseinschlag oder dem Linkseinschlag in Richtung der Mittelstellung durch die erste Korrektureinrichtung erkannt wird, und eine zweite Korrektureinrichtung zur Korrektur der Lenkcharakteristiken, durch die der gleichphasige Eingriff verringert wird, wenn die Zunahme der Stellung der Lenkrades (30) aus der Mittelstellung von der zweiten Korrektureinrichtung erkannt wird.

**18.** System nach Anspruch 17, bei dem die zweite Erfassungseinrichtung (24, 25, 26, 28) so ausgeführt ist, daß sie eine Erhöhung des Lenkwinkels des Lenkrades (30) auf Basis des Lenkwinkels des Lenkrades (30) und der Winkelgeschwindigkeit des Lenkwinkels erkennt.

**19.** System nach Anspruch 5, bei dem der Ausdruck für die Grundcharakteristik unter Verwendung einer Fahrzeuggeschwindigkeit und mit dem Lenkwinkel des Lenkrades (30) als Parameter eingestellt wird.

**20.** System nach Anspruch 5, bei dem:

die Erfassungseinrichtung (24, 25, 26, 28) so ausgeführt ist, daß sie eine entsprechend der Betätigung des Lenkrades (30) auf den Fahrzeugkörper wirkende Gierbeschleunigung erkennt; und

die Lenkcharakteristiken einen charakteristischen Ausdruck für die Gierbeschleunigung enthalten, der so gesetzt ist, daß ein gleichphasiger Eingriff verringert wird, wenn die Gierbeschleunigung größer wird.

**21.** System nach Anspruch 20, bei dem die Lenkcharakteristiken des weiteren einen charakteristischen Ausdruck für den Lenkwinkel enthalten, um das Ausmaß des gleichsinnigen Eingriffs zu verringern, wenn der Lenkwinkel des Lenkrades größer wird.

**22.** System nach einem der Ansprüche 5 bis 21, bei dem eine mechanische Konfiguration der Veränderungseinrichtung für das Lenkverhältnis so ausgelegt ist, daß die Hinterräder (16) in Mittelstellung gehalten werden, wenn sich die Vorderräder (12) in Mittelstellung befinden.

**23.** System nach Anspruch 1, bei dem die Lenkcharakteristiken so gewählt sind, daß sie einen charakteristischen Ausdruck für die Gierbeschleunigung haben, der das Ausmaß eines gleichphasigen Eingriffs verringert, wenn die Gierbeschleunigung größer wird.

**24.** System nach Anspruch 23, bei dem die Lenkcharakteristiken des weiteren mindestens einen anderen charakteristischen Ausdruck zusätzlich zu dem charakteristischen Ausdruck für die Gierbeschleunigung enthalten.

**25.** System nach Anspruch 24, bei dem der andere charakteristische Ausdruck der Ausdruck für die Grundcharakteristik ist, der unter Verwendung der Fahrzeuggeschwindigkeit als Parameter eingestellt wird.

**26.** System nach Anspruch 24, bei dem der andere charakteristische Ausdruck der charakteristische Ausdruck für den Lenkwinkel ist, um das Ausmaß des gleichsinnigen Eingriffs zu erhöhen, wenn der Lenkwinkel des Lenkrades (30) größer wird.

**27.** System nach Anspruch 24, bei dem der andere charakteristische Ausdruck der charakteristische Ausdruck für die Gierrate ist, um das Ausmaß des gleichsinnigen Eingriffs zu erhöhen, wenn die Gierrate größer wird.

28. System nach Anspruch 24, bei dem der andere charakteristische Ausdruck eine Kombination ist aus dem Ausdruck für die Grundcharakteristik, der unter Verwendung der Fahrzeuggeschwindigkeit als Parameter eingestellt wird, und dem charakteristischen Ausdruck für den Lenkwinkel zur Erhöhung des Ausmaßes des gleichphasigen Eingriffs, wenn der Lenkwinkel des Lenkrades (30) größer wird.

29. System nach Anspruch 24, bei dem der andere charakteristische Ausdruck eine Kombination ist aus dem Ausdruck für die Grundcharakteristik, der unter Verwendung der Fahrzeuggeschwindigkeit als Parameter eingestellt wird, und dem charakteristischen Ausdruck für die Gierrate zur Erhöhung des Ausmaßes des gleichphasigen Eingriffs, wenn die Gierrate höher wird.

30. System nach Anspruch 24, bei dem der andere charakteristische Ausdruck eine Kombination ist aus dem charakteristischen Ausdruck für den Lenkwinkel zur Erhöhung des Ausmaßes des gleichphasigen Eingriffs, wenn der Lenkwinkel des Lenkrades (30) größer wird, und dem charakteristischen Ausdruck für die Gierrate zur Erhöhung des Ausmaßes des gleichphasigen Eingriffs, wenn die Gierrate höher wird.

31. System nach Anspruch 24, bei dem der andere charakteristische Ausdruck eine Kombination ist aus dem Ausdruck für die Grundcharakteristik, der unter Verwendung der Fahrzeuggeschwindigkeit als Parameter eingestellt wird, und dem charakteristischen Ausdruck für den Lenkwinkel zur Erhöhung des Ausmaßes des gleichphasigen Eingriffs, wenn der Lenkwinkel des Lenkrades (30) größer wird, und dem charakteristischen Ausdruck für die Gierrate zur Erhöhung des Ausmaßes des gleichphasigen Eingriffs, wenn die Gierrate höher wird.

32. System nach Anspruch 31, des weiteren umfassend eine Einrichtung zum Korrigieren der Lenkcharakteristiken entsprechend dem Fahrzustand des Fahrzeugs, um das zu errechnende Ausmaß des gleichphasigen Eingriffs um den charakteristischen Ausdruck für den Lenkwinkel zu verringern.

33. System nach Anspruch 32, bei dem die Korrektureinrichtung so ausgeführt ist, daß sie die Funktion entsprechend dem charakteristischen Ausdruck für den Lenkwinkel verhindert, indem sie die Lenkcharakteristiken in einen Zustand bringt, in dem kein charakteristischer Ausdruck für den Lenkwinkel enthalten ist.

34. System nach Anspruch 33, bei dem die Wirksamkeit des charakteristischen Ausdrucks für den Lenkwinkel außer Kraft gesetzt wird, wenn das Fahrzeug eine Kurve durchfährt.

35. System nach Anspruch 33, des weiteren umfassend eine Entscheidungseinrichtung, die anhand des Lenkwinkels und der Gierrate über die Notwendigkeit der Möglichkeit einer Drehung des Fahrzeugvorderteils entscheidet;

wobei die Wirksamkeit des charakteristischen Ausdrucks für den Lenkwinkel außer Kraft gesetzt wird, wenn die Notwendigkeit der Möglichkeit des Steuerns des Fahrzeugvorderteils durch die Entscheidungseinrichtung festgestellt wird.

36. System nach Anspruch 31, des weiteren umfassend eine Korrektureinrichtung für das Ziellenkverhältnis, um ein Ziellenkverhältnis zu korrigieren, das auf Basis der Lenkcharakteristiken bestimmt wurde, um das Ausmaß des gleichphasigen Eingriffs zu verringern, wenn der Lenkwinkel des Lenkrades (30) vergrößert wird.

37. System nach Anspruch 36, des weiteren umfassend eine Korrektureinrichtung, um den Lenkwinkel der Hinterräder (16) zu korrigieren, der auf Basis eines Lenkwinkels der Vorderräder (12) und mit dem durch die Korrektureinrichtung für das Ziellenkverhältnis korrigierten Ziellenkverhältnis erhalten werden kann, um das Ausmaß des gleichphasigen Eingriffs zu verringern.

38. System nach einem der Anprüche 23 bis 37, des weiteren umfassend:

eine Verbindungseinrichtung (52) zur mechanischen Verbindung der Einrichtung (14) für das Lenken der Vorderräder (12) mit der Einrichtung (18) für das Lenken der Hinterräder (16); und

ein Einrichtung (20) zur Veränderung des Lenkverhältnisses der Hinterräder (16), die in die Verbindungseinrichtung (52) einbezogen ist;

wobei das Lenkverhältnis durch die Steuerung der Veränderungseinrichtung (20) für das Lenkverhältnis gesteuert wird.

**39.** System nach Anspruch 38, bei dem eine mechanische Konfiguration der Veränderungseinrichtung (20) für das Lenkverhältnis so ausgebildet ist, daß die Hinterräder (16) in Mittelstellung gehalten werden, wenn sich die Vorderräder (12) in Mittelstellung befinden.

## Revendications

**1.** Système de direction pour les roues arrière (16) d'un véhicule automobile comportant un mécanisme (14) de direction des roues avant (12) et un mécanisme (18) de direction pour les roues arrière, adapté de façon à commander une quantité de fonctionnement du mécanisme (18) pour diriger les roues arrière (16) pour fournir un rapport de direction cible pouvant être obtenu sur la base de caractéristiques de direction prédéterminées, qui comporte un moyen de détection (24, 25, 26, 28) pour détecter un état de fonctionnement d'un volant de direction (30), caractérisé en ce qu'il comporte en outre un moyen de correction (20, 22) pour corriger la quantité de fonctionnement dudit mécanisme (18) pour diriger les roues arrière (16) lorsqu'une rotation du volant de direction (30) de son état dirigé gauche ou droit à son état neutre est détectée.

**2.** Système selon la revendication 1, dans lequel :
ledit moyen de détection (24, 25, 26, 28) pour détecter l'état de fonctionnement du volant de direction (30) est apte à détecter une rotation d'un volant de direction (30) de façon à faire tourner fonctionnellement le volant de direction (30) de sa position droite ou gauche à travers sa position neutre à la position opposée ; et
ledit moyen de correction (20, 22) est apte à corriger un angle de braquage de la roue arrière (16) dans la direction d'une phase inverse.

**3.** Système selon la revendication 1, dans lequel :
ledit moyen de détection (24, 25, 26, 28) pour détecter l'état de fonctionnement du volant de direction (30) est apte à détecter une rotation d'un volant de direction (30) de façon à faire tourner fonctionnellement le volant de direction (30) de sa position droite ou gauche vers sa position neutre ; et
ledit moyen de correction (20, 22) est apte à corriger un angle de braquage de la roue arrière (16) dans la direction d'une même phase.

**4.** Système selon la revendication 1, dans lequel ledit moyen de détection (24, 25, 26, 28) pour détecter l'état de fonctionnement du volant de direction (30) comporte un premier moyen de détection pour détecter une rotation du volant de direction (30) de sa position droite ou gauche à travers sa position neutre vers la position opposée et un deuxième moyen de détection pour détecter une rotation du volant de direction (30) de sa position droite ou gauche vers sa position neutre ; et
ledit moyen de correction (20, 22) comporte un premier moyen de correction pour corriger un angle de braquage de la roue arrière (30) dans la direction d'une phase inverse lorsque la rotation du volant de direction (30) de sa position droite ou gauche à travers sa position neutre à la position opposée est détectée par ledit premier moyen de détection et ledit deuxième moyen de correction pour corriger l'angle de braquage de la roue arrière (16) dans la direction d'une même phase lorsque la rotation du volant de direction (30) de sa position droite ou gauche vers sa position neutre est détectée par ledit deuxième moyen de détection.

**5.** Système selon la revendication 1, comportant en outre :

un mécanisme d'interconnexion (52) pour interconnecter mécaniquement ledit mécanisme (14) pour diriger les roues avant (12) avec ledit mécanisme (18) pour diriger les roues arrière (16) ; et
un mécanisme de changement de rapport de direction (20) pour changer un rapport de direction qui est incorporé dans ledit mécanisme d'interconnexion (52) ;
dans lequel lesdites caractéristiques de direction présentent un terme caractéristique de base et un terme caractéristique pour un angle de lacet pour diminuer une quantité d'une même phase à un plus faible degré lorsque l'angle de lacet devient plus grand de façon à faire converger l'angle de lacet agissant sur une caisse de véhicule.

**6.** Système selon la revendication 5, dans lequel :

ledit moyen de détection (24, 25, 26, 28) pour détecter l'état de fonctionnement du volant de direction (30) est apte à détecter une rotation du volant de direction (30) de façon à faire tourner fonctionnellement le volant de direction de sa position droite ou gauche à travers sa position neutre à la position opposée ; et

ledit moyen de correction (20, 22) est apte à corriger le rapport de direction de base déterminé par le terme caractéristique de base de façon à diminuer la quantité de la même phase.

7. Système selon la revendication 6, dans lequel ledit moyen de correction (20, 22) est apte à corriger le rapport de direction à déterminer par lesdites caractéristiques de direction.

8. Système selon la revendication 7, dans lequel ledit moyen de détection (24, 25, 26, 28) est apte a détecter la rotation du volant de direction (30) de sa position droite ou gauche à travers sa position neutre à la position opposée sur la base d'un angle de braquage du volant de direction (30) et d'une vitesse angulaire de l'angle de braquage.

9. Système selon la revendication 6, dans lequel ledit moyen de correction (20, 22) est apte à exécuter une correction seulement lorsqu'une vitesse angulaire d'un angle de braquage est plus grande qu'une valeur prédéterminée.

10. Système selon la revendication 6, dans lequel ledit moyen de correction (20, 22) est apte à changer le terme caractéristique de l'angle de lacet de façon à diminuer la même phase en inversant un signe négatif ou positif d'un gain de commande dudit terme caractéristique de l'angle de lacet au signe opposé.

11. Système selon la revendication 6, dans lequel ledit moyen de détection (24, 25, 26, 28) est apte à détecter la rotation du volant de direction (30) de sa position droite ou gauche à travers sa position neutre à la position opposée lorsque la direction suivant laquelle le volant de direction (30) est fonctionnellement tourné est opposée à la direction dans laquelle l'angle de lacet se forme.

12. Système selon la revendication 10, dans lequel lesdites caractéristiques de direction sont établies par la formule suivante

$$\theta S = C1 + C2 \cdot Y$$

où

$\theta S$           représente le rapport de direction ;
C1           est le terme caractéristique de base ;
C2           est un gain de commande ; et
Y            représente l'angle de lacet ;

où ledit signe négatif ou positif du gain de commande dudit terme caractéristique pour l'angle de lacet est établi de telle manière que le gain de commande C2 présente un signe négatif ou positif de façon à faire augmenter la quantité de la même phase au fur et à mesure que l'angle de lacet Y devient plus grand lorsque le volant de direction (30) est tourné opérationnellement dans la direction vers la gauche ou vers la droite depuis sa position neutre, d'une part, et que le gain de commande C2 présente le signe opposé lorsque le volant de direction est tourné opérationnellement dans la direction opposée depuis sa position neutre, d'autre part.

13. Système selon la revendication 6, dans lequel une valeur de correction par ledit moyen de correction est établie en accord avec une vitesse angulaire d'un angle de braquage.

14. Système selon la revendication 13, dans lequel :

ledit moyen de détection est apte à détecter la rotation du volant de direction (30) de sa position droite ou gauche vers sa position neutre ; et
ledit moyen de correction est apte à corriger lesdites caractéristiques de direction de façon à faire augmenter la quantité de la même phase lorsque la rotation du volant de direction (30) de sa position droite ou gauche vers sa position neutre est détectée par ledit moyen de détection (24, 25, 26, 28).

15. Système selon la revendication 14, dans lequel ledit moyen de détection (24, 25, 26, 28) est apte à détecter la rotation du volant de direction (30) de sa position gauche ou droite vers sa position neutre sur la base de l'angle de braquage du volant de direction (30) et de la vitesse angulaire de l'angle de braquage.

16. Système selon la revendication 14, dans lequel une valeur de correction par ledit moyen de correction (20, 22) est établie en accord avec la vitesse angulaire de l'angle de braquage.

**17.** Système selon la revendication 5, dans lequel :

ledit moyen de détection (24, 25, 26, 28) comporte le premier moyen de détection pour détecter la rotation du volant de direction de sa position gauche ou droite vers sa position neutre et un deuxième moyen de détection pour détecter une position du volant de direction qui augmente depuis sa position neutre ; et

ledit moyen de correction (20, 22) comporte un premier moyen de correction pour corriger les caractéristiques de direction de façon à faire augmenter la même phase lorsque la rotation du volant de direction (30) de sa position droite ou gauche vers sa position neutre est détectée par ledit premier moyen de détection et un deuxième moyen de correction pour corriger les caractéristiques de direction de façon à faire diminuer la même phase lorsque la position du volant de direction (30) en augmentation depuis sa position neutre est détectée par ledit deuxième moyen de détection.

**18.** Système selon la revendication 17, dans lequel ledit deuxième moyen de détection (24, 25, 26, 28) est apte à détecter une augmentation de l'angle de braquage du volant de direction (30) sur la base de l'angle de braquage du volant de direction (30) et de la vitesse angulaire de l'angle de braquage.

**19.** Système selon la revendication 5, dans lequel ledit terme caractéristique de base est établi en utilisant une vitesse du véhicule et l'angle de braquage du volant de direction (30) comme paramètres.

**20.** Système selon la revendication 5, dans lequel :

ledit moyen de détection (24, 25, 26, 28) est apte à détecter une accélération de lacet qui se produit sur une caisse d'un véhicule en accord avec le fonctionnement du volant de direction (30) ; et

lesdites caractéristiques de direction contiennent un terme caractéristique pour l'accélération du lacet qui est établi de façon à faire diminuer une quantité d'une même phase lorsque l'accélération du lacet devient plus grande.

**21.** Système selon la revendication 20, dans lequel lesdites caractéristiques de direction contiennent en outre un terme caractéristique pour l'angle de braquage pour diminuer la quantité de la même phase lorsque l'angle de braquage du volant de direction devient plus grand.

**22.** Système selon l'une des revendications 5 à 21, dans lequel une configuration mécanique dudit mécanisme de changement de rapport de direction est établie de façon à maintenir les roues arrière (16) dans les positions neutres lorsque les roues avant (12) sont maintenues dans les positions neutres.

**23.** Système selon la revendication 1, dans lequel lesdites caractéristiques de direction sont établies pour avoir un terme caractéristique pour l'accélération du lacet afin de diminuer une quantité d'une même phase lorsque l'accélération du lacet devient plus grande.

**24.** Système selon la revendication 23, dans lequel lesdites caractéristiques de direction contiennent en outre au moins un autre terme caractéristique en plus du terme caractéristique pour l'accélération du lacet.

**25.** Système selon la revendication 24, dans lequel ledit autre terme caractéristique est le terme caractéristique de base établi en utilisant une vitesse de véhicule comme paramètre.

**26.** Système selon la revendication 24, dans lequel ledit autre terme caractéristique est le terme caractéristique pour l'angle de braquage afin d'augmenter la quantité de la même phase lorsque l'angle de braquage du volant de direction (30) devient plus grand.

**27.** Système selon la revendication 24, dans lequel ledit autre terme caractéristique est le terme caractéristique pour l'angle de lacet afin d'augmenter la quantité de la même phase lorsque l'angle de lacet devient plus grand.

**28.** Système selon la revendication 24, dans lequel ledit autre terme caractéristique est une combinaison du terme caractéristique de base établi en utilisant une vitesse du véhicule comme paramètre avec le terme caractéristique pour l'angle de braquage afin d'augmenter la quantité de la même phase lorsque l'angle de braquage du volant de direction (30) devient plus grand.

**29.** Système selon la revendication 24, dans lequel ledit autre terme caractéristique est une combinaison du terme caractéristique de base établi en utilisant une vitesse de véhicule comme paramètre avec le terme caractéristique pour l'angle de lacet afin d'augmenter la quantité de la même phase lorsque l'angle de lacet devient plus grand.

30. Système selon la revendication 24, dans lequel ledit autre terme caractéristique est une combinaison du terme caractéristique de l'angle de braquage pour augmenter la quantité de la même phase lorsque l'angle de braquage du volant de direction (30) devient plus grand avec le terme caractéristique de l'angle de lacet pour faire augmenter la quantité de la même phase lorsque l'angle de lacet devient plus grand.

31. Système selon la revendication 24, dans lequel ledit autre terme caractéristique est une combinaison du terme caractéristique de base établi en utilisant une vitesse de véhicule comme paramètre avec le terme caractéristique de l'angle de braquage pour faire augmenter la quantité de la même phase lorsque l'angle de braquage du volant de direction (30) devient plus grand et le terme caractéristique de l'angle de lacet pour faire augmenter la quantité de la même phase lorsque l'angle de lacet devient plus grand.

32. Système selon la revendication 31, comportant en outre un moyen de correction pour corriger lesdites caractéristiques de direction en accord avec l'état dans lequel un véhicule se déplace de façon à diminuer la quantité de la même phase a calculer par ledit terme caractéristique pour l'angle de braquage.

33. Système selon la revendication 32, dans lequel ledit moyen de correction est apte à empêcher un fonctionnement par ledit terme caractéristique pour l'angle de braquage pour amener ainsi les caractéristiques de direction dans un état où aucun terme caractéristique de l'angle de braquage est contenu.

34. Système selon la revendication 33, dans lequel le fonctionnement du terme caractéristique de l'angle de braquage est empêché lorsque le véhicule négocie un virage.

35. Système selon la revendication 33, comportant en outre un moyen de décision pour décider une nécessité de capacité a faire tourner une tête d'un véhicule sur la base de l'angle de braquage et de l'angle de lacet ;
dans lequel le fonctionnement du terme caractéristique de l'angle de braquage est empêché lorsque la nécessité de capacité à faire tourner la tête du véhicule est décidée par ledit moyen de décision.

36. Système selon la revendication 31, comportant en outre un moyen de correction du rapport de direction cible pour corriger un rapport de direction cible déterminé sur la base desdites caractéristiques de direction de façon à diminuer la quantité de la même phase lorsque l'angle de braquage du volant de direction (30) augmente.

37. Système selon la revendication 36, comportant en outre un moyen pour corriger l'angle de braquage de la roue arrière (16), pouvant être obtenu sur la base d'un angle de braquage de la roue avant (12) et du rapport de direction cible corrigé par ledit moyen de correction du rapport de direction cible de façon à diminuer la quantité de la même phase.

38. Système selon l'une des revendications 23 à 37, comportant en outre :

un mécanisme d'interconnexion (52) pour interconnecter mécaniquement ledit mécanisme (14) pour diriger les roues avant (12) avec ledit mécanisme (18) pour diriger les roues arrière (16) ; et
un moyen de changement de rapport de direction (20) pour changer le rapport de direction de la roue arrière (16) qui est incorporé dans ledit mécanisme d'interconnexion (52) ;
dans lequel ledit rapport de direction est commandé en commandant ledit mécanisme de changement de rapport de direction (20).

39. Système selon la revendication 38, dans lequel une configuration mécanique dudit mécanisme de changement de rapport de direction (20) est établi de façon à maintenir les roues arrière (16) dans les positions neutres lorsque les roues avant (12) sont maintenues dans les positions neutres.

# FIG.1

# FIG.2

EP 0 507 237 B1

# FIG.3

# FIG.4

FIG.5

FIG.6

# FIG.7

g(V)

+

−

VEHICLE
SPEED, V

EP 0 507 237 B1

FIG.8

# FIG.9

# FIG.10

# FIG.11

## FIG.12

## FIG.13

EP 0 507 237 B1

FIG.14

START

P1 — DATA INPUT

P2 — TURNED LEFT ?  NO

YES

P3 — C2 ← (+)    C2 ← (−) — P4

P5 — DECIDE θS

P6 — TGθR ← θS

P7 — REALIZE TGθR

RETURN

36

# FIG.15

# FIG.16

# FIG.17

K3(V)

VEHICLE
SPEED, V

# FIG.18

K4(V)

VEHICLE
SPEED, V

# FIG.19

# FIG.20

# FIG.21

# FIG.22

# FIG.23

# FIG.24

# FIG.25

# FIG.26

# FIG.27

# FIG.28

# FIG.29

START

DATA INPUT — Q1

Q2
IN NEUTRAL
POSITION OR PAST
NO / YES

STORE CURRENT Y — Q3

Q4
CURRENT Y
≤ THRESHOLD
VALUE, Y
NO / YES

Q5
STRAIGHT?
NO / YES

Q8
Y &
STEERED ANGLE
INCREASED?
NO / YES

Q6
FLAG→0

Q9
FLAG→1

Q10
STEERED
ANGLE > LOWER
LIMIT, θH
NO / YES

Q11
STEERED
ANGLE INCREASED
NO / YES

Q12
θHM ← |θH|

Q13
θHM = LOWER LIMIT, θH
+(|θH|−LOWER LIMIT, θH)×f8(V)

Q7
θSTG ← CALCULATED VALUE, θS

1

43

# FIG.30

①

Q21 — CORNERING? — NO

YES

Q22 — STEERED ANGLE INCREASED — NO

YES

Q23 — $\theta$STG > LOWER LIMIT, $\theta$S — NO

Q24 — $\theta$STG2 ← $\theta$STG

YES

Q25 — $\theta$STG1 = LOWER LIMIT, $\theta$S + ($\theta$STG − LOWER LIMIT, $\theta$S) × f 12 (V)

Q26 — $\theta$STG1 ≦ UPPER LIMIT, $\theta$S

NO

Q28 — $\theta$STG2 ← UPPER LIMIT, $\theta$S

YES

Q27 — $\theta$STG2 ← $\theta$STG1

②

EP 0 507 237 B1

# FIG.31

45

# FIG.32

($\theta$S=FORMULA(6))

($\theta$S=FORMULA(7))

TIME

# FIG.33